# EUROPEAN PATENT APPLICATION

(11) **EP 2 077 693 A1**
(43) Date of publication of application: **08.07.2009**
(21) Application number: 08006541.0
(22) Date of filing: 31.03.2008
(51) Int. Cl.: H04W 74/08, H04W 28/18

(54) **Dynamic interference control in a wireless communication network**

(30) Priority: 04.01.2008 US 969775
(71) Applicant: Qualcomm Incorporated, San Diego, CA 92121-1714 (US)
(72) Inventor: Sampath, Ashwin, San Diego California 92121-1714 (US); Horn, Gavin Bernard, San Diego California 92121-1714 (US)
(74) Representative: Heselberger, Johannes

(57) **Abstract**

A method and apparatus for dynamic interference management is disclosed. A frequency channel is partitioned into a plurality of groups (GROUP 0-15). Two or more groups are assigned weights (WEIGHT 0-1) reflecting degrees of disadvantage of a node. Each group is further partitioned into a plurality of tones (TONE 0-29). A node experiencing interference determines a group, selects a tone within the group, and transmits a wireless signal using the selected tone. A receiving node receives a plurality of tones including the selected tone, identifies active tones from the received tones, and determines a response based on the weights of the active tones.

## Description

### BACKGROUND

### Field

This application relates generally to wireless communication and more specifically, but not exclusively, to techniques for interference management in wireless networks.

### Background

In recent years, developers of the numerous wireless communication systems in place today have striven to find ways to maximize the integrity of wireless transmissions over the existing communications links. Unlike hardwired networks, the atmospheric medium for transmission of signals in a wireless network creates an environment where a large number of discrete signals are simultaneously transmitted, and tend to interfere with one another. These disparate transmissions often inject noise and crosstalk into received wireless signals, which can result in the failed delivery of information, which in turn may reduce overall network effectiveness.

The interference problem is exacerbated as the capacity of wireless networks continues to escalate in response to the widespread use of more mobile handsets and other wireless devices. Generally speaking, more wireless devices in a given area means an increased overall susceptibility of the devices to interference. Meanwhile, the consumer demand for ever greater wireless bandwidth remains. At some point, the dual goals of increased capacity and higher bandwidth begin to impose limitations on network parameters like data throughput, available transmission power, wireless range, and the like.

A variety of techniques have been proposed to control the impact of interference in wireless communications. Some wireless systems enable nodes experiencing poor signal quality to transmit a specialized message to neighboring transmitters, requesting them to temporarily "back off' from transmitting interfering signals. The benefit of this approach to the overall network, however, may be limited if the message recipients are not configured to account for the fact that other nearby nodes may be experiencing similar or worse interference levels.

To account for fairness among nodes, one technique involves the afflicted nodes sending a resource utilization message (RUM) to transmitting nodes in the vicinity. The RUM may identify (1) the channels on which the node is experiencing interference, and (2) a quantized "degree of disadvantage" of the node relative to other nodes. A RUM receiving node may be configured to first address the needs of the most disadvantaged node by reducing its transmit power on a carrier frequency used by the RUM sender, or by abstaining from transmitting until the interference falls to acceptable levels. Other affected nodes can be addressed in turn, as their respective levels of disadvantage relative to each other vary over time.

Obscuring the RUM approach is the fact that many wireless nodes, such as access points and access terminals in a wireless communication system, do not necessarily have *a priori* knowledge of the communication channels of all nodes in the vicinity. For example, the interfering transmitters may not have been allocated network resources to communicate with the affected nodes, and vice versa. Conventional approaches would therefore require that these transmitters dedicate further network resources to coherently detect RUMs from these nodes. Such approaches are inefficient and tend to disproportionately cannibalize network resources.

### SUMMARY

A summary of sample aspects of the disclosure follows. It should be understood that any reference to the term aspects herein may refer to one or more aspects of the disclosure.

In one aspect of the disclosure, an apparatus for wireless communications includes a processing system configured to determine a group of tones from a plurality of groups of tones, select a tone in the group, and transmit a wireless signal using the tone.

In another aspect of the disclosure, an apparatus for wireless communications includes means for determining a group of tones from a plurality of groups of tones, means for selecting a tone in the group, and means for transmitting a wireless signal using the tone.

In another aspect of the disclosure, an apparatus for wireless communications includes a processing system configured to receive a plurality of tones, identify as active tones the received tones that comprise a measure of energy satisfying a condition, identify a group for each active tone, each group comprising a weight, and determine a response based on the weights of the active tones.

In yet another aspect of the disclosure, an apparatus includes means for receiving a plurality of tones, means for identifying as active tones the received tones that comprise a measure of energy satisfying a condition, means for identifying a group for each active tone, each group comprising a weight, and means for determining a response based on the weights of the active tones.

In a further aspect of the disclosure, an access point includes an antenna, a transmitter configured to transmit wireless signals on the antenna, and a processing system configured to determine a group of tones from a plurality of groups of tones, select a tone in the group, and transmit from the transmitter the wireless signal using the tone.

In still a further aspect of the disclosure, an access point includes an antenna, a receiver configured to receive a plurality of tones, and a processing system configured to identify as active tones the received tones that comprise a measure of energy satisfying a condition, identify a group for each active tone, each group comprising a weight, and determine a response based on the weights of the active tones.

In yet another aspect of the disclosure, an access terminal includes an antenna, a screen for providing a user interface, one or more input keys for displaying symbols on the screen, and a processing system configured to determine a group of tones from a plurality of groups of tones, select a tone in the group, and transmit from the antenna a wireless signal using the tone.

In still another aspect of the disclosure, an access terminal includes a screen for providing a user interface, one or more input keys for displaying symbols on the screen, a receiver configured to receive a plurality of tones, and a processing system configured to identify as active tones the received tones that comprise a measure of energy satisfying a condition, identify a group for each active tone, each group comprising a weight, and determine a response based on the weights of the active tones.

In still another aspect of the disclosure, a method of wireless communications includes determining a group of tones from a plurality of groups of tones, selecting a tone in the group, and transmitting a wireless signal using the tone.

In yet a further aspect of the disclosure, a method of wireless communications includes receiving a plurality of tones, identifying as active tones the received tones that comprise a measure of energy satisfying a condition, identifying a group for each active tone, each group comprising a weight, and determining a response based on the weights of the active tones.

In yet another aspect of the invention, a computer-program product comprising a machine-readable medium includes instructions executable by a machine for performing a method of wireless communications, the instructions configured when run to determine a group of tones from a plurality of groups of tones, select a tone in the group, and transmit a wireless signal using the tone.

In a further aspect of the invention, a computer-program product comprising a machine-readable medium includes instructions executable by a machine for performing a method of wireless communications, the instructions configured when run to receive a plurality of tones, identify as active tones the received tones that comprise a measure of energy satisfying a condition, identify a group for each active tone, each group comprising a weight, and determine a response based on the weights of the active tones.

It is understood that other aspects of the invention will become readily apparent to those skilled in the art from the following detailed description, wherein various aspects of the invention are shown and described by way of illustration. As will be realized, the invention is capable of other and different configurations and implementations and its several details are capable of modification in various other respects, all without departing from the scope of this disclosure. Accordingly, the drawings and detailed description are to be regarded as illustrative in nature and not as restrictive.

### DESCRIPTION OF THE DRAWINGS

These and other sample aspects of the disclosure will be described in the detailed description and the appended claims that follow, and in the accompanying drawings, wherein:

FIG. 1 is a simplified diagram of several sample aspects of a wireless communication system;

FIG. 2A is a simplified diagram of sample traffic flows in a network of wireless nodes;

FIG. 2B is a simplified diagram of several sample aspects of designation of timeslot usage;

FIG. 3 is an illustration of a timeslot;

FIG. 4 is an illustration of a timeslot including RUM tones;

FIG. 5 is an illustration of multiple frequency channels;

FIG. 6 is a simplified diagram of a wireless network in which RUMs are sent;

FIG. 7 is a simplified diagram of sequential timeslots during which control information and data are exchanged;

FIG. 8 is a simplified flow diagram illustrating a node sending a RUM;

FIG. 9 is a simplified flow diagram illustrating a node receiving RUMs;

FIG. 10 is a conceptual diagram of a frequency band segregated into groups of tones;

FIG. 11 is a simplified block diagram of several sample aspects of wireless devices adapted to send and receive RUMs;

FIG. 12 is a conceptual flow diagram illustrating a node sending a RUM;

FIG. 13 is a conceptual flow diagram illustrating a node receiving RUMs;

FIG. 14 is a conceptual flow diagram illustrating the ordering of tones;

FIG. 15 is a simplified block diagram of several sample aspects of communication components; and

FIG. 16 is a simplified block diagram of several sample aspects of an apparatus configured to designate timeslot usage as taught herein.

FIG. 17 is a block diagram of a set of modules for transmitting a wireless signal on a selected tone.

FIG. 18 is a block diagram of a set of modules for determining a response based on receiving a plurality of tones.

In accordance with common practice the various features illustrated in the drawings may not be drawn to scale. Accordingly, the dimensions of the various features may be arbitrarily expanded or reduced for clarity. In addition, some of the drawings may be simplified for clarity. Thus, the drawings may not depict all of the components of a given apparatus (e.g., device) or method. Finally, like reference numerals may be used to denote like features throughout the specification and figures.

### DETAILED DESCRIPTION

Various aspects of the disclosure are described below. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. Furthermore, an aspect may comprise at least one element of a claim.

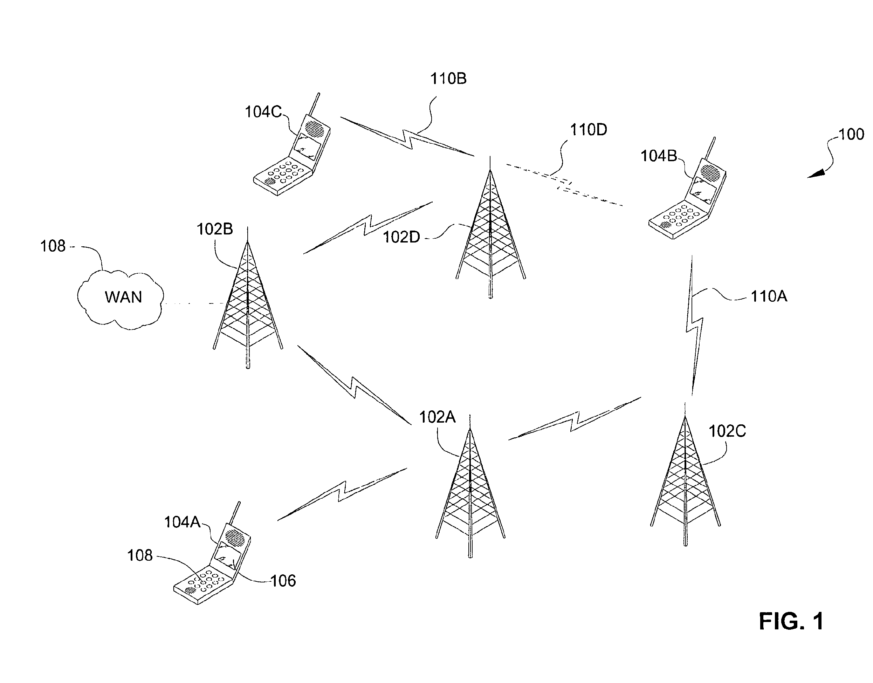

FIG. 1 illustrates several sample aspects of a wireless communication system 100. The system 100 includes several wireless nodes, generally designated as nodes 102 and 104. Node 102B is connected to a wide area network (WAN) 111. A given node may receive one or more traffic flows, transmit one or more traffic flows, or both. For example, each node may comprise at least one antenna and associated receiver and transmitter components. In the discussion that follows the term receiving node may be used to refer to a node that is receiving and the term transmitting node may be used to refer to a node that is transmitting. Such a reference does not imply, however, that the node is incapable of performing both transmit and receive operations.

In some implementations a node may comprise an access terminal, a relay point, or an access point. For example, the nodes 102 may comprise access points or relay points and the nodes 104 may comprise access terminals. An access terminal may include attributes such as keys 108 for inputting user commands or displaying symbols and a screen 106 for providing a user interface for displaying the symbols. In a typical implementation the access points 102 provide connectivity for a network (e.g., a Wi-Fi network, a cellular network, a WiMax network, a wide area network such as the Internet, and so on). A relay point 102 may provide connectivity to another relay point or to an access point. For example, when an access terminal (e.g., access terminal 104A) is within a coverage area of a relay point (e.g., relay point 102A) or an access point (e.g., access point 102B), the access terminal 104A may be able to communicate with another device connected to the system 100 or some other network.

In a wireless communication system such as the one disclosed in FIG. 1, a node in the network may communicate with (i.e., send and receive data to) any associated node. In general, an associated node is any node in which a communications link has been established between the node and another node. The communications link includes a set of resources that may be identified by one of the nodes, or by another network entity configured to allocate network resources according to a central plan.

It should be noted that the aspects disclosed herein discuss tone selection based on Orthogonal Frequency Division Multiplexing (OFDM) signaling, however other techniques can be utilized with the disclosed aspects. In OFDM signaling, each node utilizes one or more tones to transmit the necessary controlling information for the data transmission (*e*.*g*., request to transmit, grant to transmit). For example, two nodes initially performing handshaking to establish a communications link may reach agreement upon the use of one or more tones (which may be frequency hopped over time), or upon a set of rules for determining a tone, wherein the tone is used for transmitting data or a control indication. One of the nodes may include, for instance, an access point configured to allocate network resources among a plurality of nodes. Once a link has been established between the two nodes, one node can send a request to transmit to its associated node. The associated node can then reply with a grant if, for example, the node has the resources available to accommodate the request to transmit.

A node having information to transmit to another node may send a request to one of many types of arbitrating nodes for permission to transmit on one or more available timeslots. When the request is granted, the node may transmit data or control information, or both, using the designated timeslots. In a synchronous system, the node may be configured to transmit information during certain timeslots, and to receive information during other timeslots. Thus, the node may also monitor designated timeslots for data or control information sent to the node from another node.

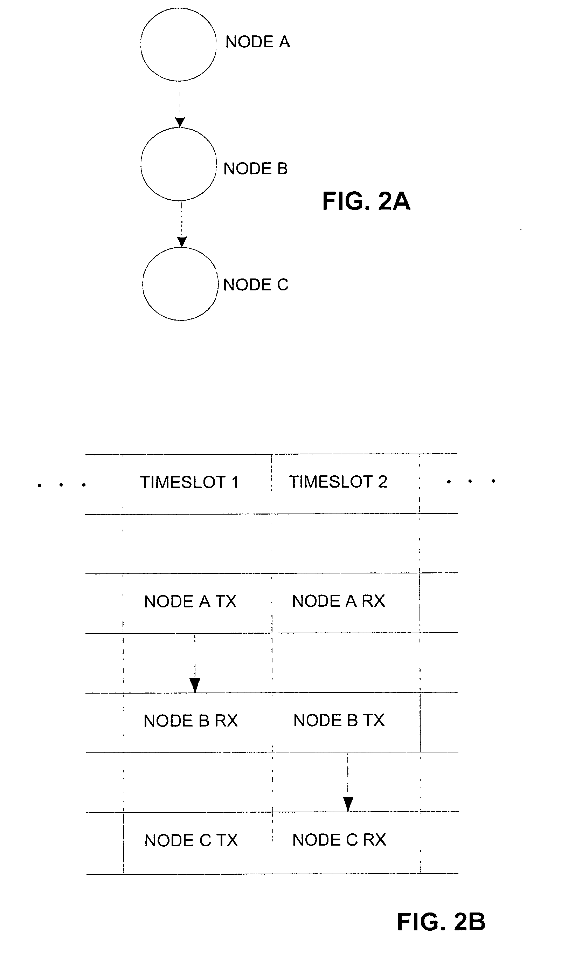

FIG. 2 illustrates a simplified example of traffic flows associated with transmit timeslots and receive timeslots. Referring to FIG. 2A, in this example one flow of traffic is from a node A (e.g., node 104A in FIG. 1) to a node B (e.g., node 102A) and then to a node C (e.g., node 102B). Each of the nodes A, B, and C are allowed to transmit or to receive during certain timeslots. For example, referring to FIG. 2B, nodes A and C transmit during odd numbered timeslots and node B transmits during even numbered timeslots. Conversely, nodes A and C receive during even numbered timeslots and node B receives during odd numbered timeslots. As illustrated by the relative alignment of the timeslots of FIG. 2B, the timeslots for the nodes A, B, and C are synchronized.

In a wireless network environment, a number of nodes may be transmitting and receiving data at any given time. A particular node may be synchronized to the timeslots of one or more other nodes in the vicinity. Especially in larger networks, it is equally likely that two or more nodes in the network are not synchronized with each other, such that, for example, a node receiving wireless data transmissions may also be experiencing interference from other transmitting nodes that are using the same carrier frequency to communicate with unrelated nodes. This interference is often more pronounced in locations where multiple wireless cells happen to be servicing a large number of wireless devices. In this situation, many disparate nodes may be simultaneously transmitting and receiving wireless signals using similar or identical frequencies, generating more signal traffic and creating more interference.

Various interference management techniques may be employed to reduce the possibility of interference between nodes in a wireless system. The nodes in the system may transmit control indications that are used to reduce the amount of interference seen by a given node. For example, a node that is experiencing interference when it is trying to receive data from a particular node may transmit a control indication requesting that other nodes refrain from transmitting or reduce their transmit power when the receiving node is receiving data. To this end, nodes that have data to transmit may be configured to regularly scan for such control indications from nodes that are expecting to receive data.

As mentioned above, in FIG. 2B the timeslots for nodes A, B, and C are synchronized in that the timeslots commence and end at the same time. In such an implementation, a specific period of time within a timeslot may be designated for the transmission of a control indication. In this case, nodes that have data to transmit may scan for control indications at the designated period of time during a timeslot to determine whether any receiving nodes are requesting transmitting nodes to limit their transmissions. This method of interference avoidance may be employed across a synchronous system. That is, any node in the synchronous system may monitor for control indications at the designated times to readily determine whether there are any associated or non-associated receiving nodes that are requesting the transmitting nodes to limit their transmissions.

A contention scheme may be employed to mitigate any interference that wireless transmissions from a node in a network cause at a neighboring node. For example, referring again to FIG. 1, the node 104B may be receiving from the node 102C (as represented by a wireless communication symbol 110A) at the same time that a node 102D is transmitting to a node 104C (as represented by a symbol 110B). Depending on the distance between the nodes 104B and 102D and the transmission power of the node 102D, transmissions from the node 102D (as represented by a dashed symbol 110C) may interfere with reception at the node 104B.

To reduce such interference, the nodes of a wireless communication system may employ an inter-node messaging scheme. For example, when reception at a node is being interfered with, the quality of service (QoS) of the received data may decrease. In the event the quality of service level at the node falls below a desired quality of service level, the node may transmit a control indication generically referred to herein as a resource utilization message ("RUM"). A RUM may be weighted to indicate not only that a receiving node is disadvantaged (e.g., due to the interference it sees while receiving) and desires a collision avoidance mode of transmission, but also the degree to which the receiving node is disadvantaged.

A transmitting node that receives a RUM may utilize the fact that it has received a RUM, as well as the weight thereof, to determine an appropriate response. For example, if a transmitting node determines that a non-associated receiving node is more disadvantaged than a receiving node associated with that transmitting node, the transmitting node may elect to abstain from transmitting for a designated period of time, in order to allow the non-associated receiving node a clearer channel upon which to receive communications. Alternatively, the transmitting node may reduce its transmit power during one or more designated timeslots to avoid interfering with the non-associated receiving node.

In the event the transmitting node determines that its own associated receiving node is more disadvantaged than any other receiving nodes that sent RUMs, the transmitting node may be configured to ignore the RUMs from the non-associated nodes. In this case, the transmitting node may elect to proceed to transmit to its associated node during the next available timeslot.

The advertisement of the RUMs and associated weights may thus provide a collision avoidance scheme that is fair to all nodes in the system. Here, nodes that have data to transmit may scan for control indications at the designated period of time during a timeslot to determine whether any receiving nodes are requesting transmitting nodes to limit their transmissions. This method of interference avoidance may be employed across a synchronous system. That is, any node in the synchronous system may monitor for control indications at the designated times to readily determine whether there are any associated or non-associated receiving nodes that are requesting the transmitting nodes to limit their transmissions.

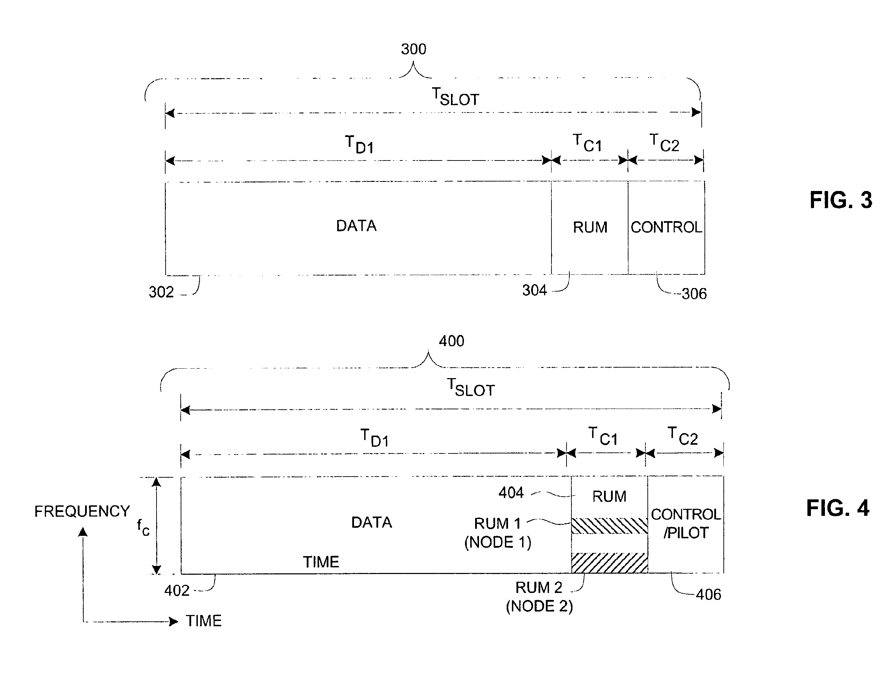

FIG. 3A illustrates a sample timeslot structure. As mentioned above, the timeslots for two or more nodes in a wireless network may be synchronized. In such an implementation, specific periods of time may be designated within each timeslot for the transmission of data information, and the transmission of control information. Timeslot 300 of duration T_{SLOT} is shown. Timeslot 300 may be used for forward link traffic (e.g., traffic flows from an access point or relay point to an access terminal) or reverse link traffic (e.g., traffic flows from an access terminal to an access point or relay point). In this aspect, timeslot 300 has a data period 302 of duration T_{D1} during which data may be transmitted. Timeslot 300 also has two control portions 304 and 306 having respective durations T_{C1} and T_{C2}. Control information may be sent in control portions 304 and 306. For example, a node experiencing interference may transmit a RUM during control portion 304. A node may transmit other control signals (*e.g.*, a request to transmit, a grant, an acknowledgement, a negative acknowledgement, *etc*.) and/or a pilot signal during control portion 306.

In practice, the format of a timeslot 300 typically varies depending on the network implementation. It should be appreciated that the sizes of the data and control portions in FIG. 3 are merely representative. The sizes of the data portions may be significantly larger than the sizes of the control portions. Further, the timeslot may include multiple data slots, multiple control slots, or other variations. In other aspects, the timeslots for the forward and reverse links may use a different format.

The timeslot 300 is generally part of a sequence of similar or identical timeslots that may be shared among multiple nodes in a wireless communication system using time division multiplexing techniques. In such a system, the nodes may be allocated data and/or control slots at different times as discussed above. In one aspect, each node may be allocated a separate timeslot. Timeslots may be assigned to different nodes over time by an arbitrating entity using a contention scheme or another set of rules for allocating shared resources among the multiple nodes.

The control portions of the timeslot 300 may be used, for example, in a system that employs a request-grant timeslot transmission control scheme whereby each node may send a message to its associated receiver to request to transmit during an upcoming timeslot. For example, two nodes may be associated with one another whereby a first node is configured to transmit during odd timeslots while a second node is initially configured to transmit during even numbered timeslots. In the event the first node wishes to send data to the second node in a particular timeslot, the first node may listen to a control channel or an allocated RUM channel during earlier timeslots to determine, for example, whether any other nodes are contending for that particular timeslot.

Other types of implementations use additional multiplexing schemes for the transmitting and receiving wireless data. For many wireless networks, frequency division multiple access (FDMA) is used to allocate discrete carrier frequencies to different nodes. In addition, network infrastructures involving spread spectrum communications typically employ multiple code channels using code division multiple access (CDMA) techniques. Further, various network implementations may use a combination of different multiplexing techniques to increase system capacity or maximize network performance.

A given tone may be of any duration, and the duration of the tones may be fixed or varied depending on the implementation. In one configuration, a tone may comprise a portion of a timeslot structure, such as control portion 304 of timeslot 300. The prescribed duration of any given tone may vary widely depending on the aspect, and may be dependent on the type of signal being transmitted (e.g., data versus control indication, *etc*.).

FIG. 4 shows an example of two tones in timeslot 400 used on a frequency channel f_{C}. In the example shown, NODE 1 (such as access terminal 104A of FIG. 1) transmits a first resource utilization message RUM 1, and NODE 2 (such as access terminal 104B of FIG. 1) transmits a second resource utilization message RUM 2. In this example, RUM 1 and RUM 2 are transmitted simultaneously in the RUM portion 404 of timeslot 300 during the time T_{C1}, although other configurations may use different timeslot formats. In one configuration, described below, the frequency channel f_{C} is partitioned into a plurality of tones whereby transmitting nodes can send signals on different tones and receiving nodes can differentiate signals received on different tones.

In other configurations, data and other control signals may also be divided into sets of tones, allowing networked nodes to send and receive multiple simultaneous tones comprising data or control indications across a channel of frequency f_{C}. Data and control may also be mixed, wherein control tones for one pair of nodes may be data tones for another pair.

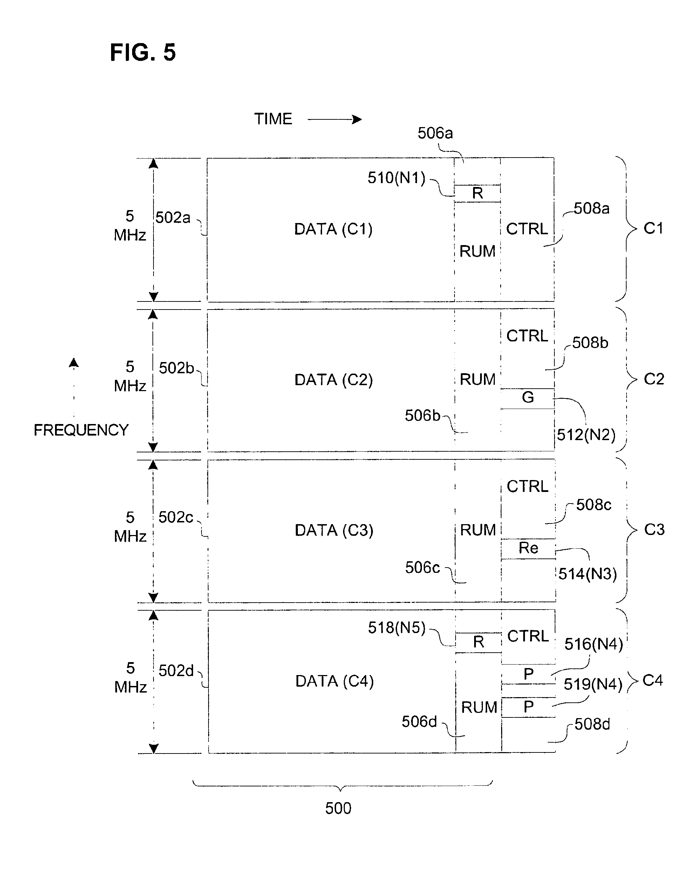

FIG. 5 depicts a time-frequency diagram of four frequency bands 502*a-d* respectively associated with carrier frequencies C1, C2, C3, and C4, which are further partitioned into timeslots 500. In this example, each frequency band 502*a-d* has a bandwidth of 5 MHz. On each frequency band 502, a timeslot 500 defines a first portion of the slot 502*a-d* dedicated for the transmission of data, a second portion of the slot 506*a-d* dedicated for the transmission of RUMs, and a third portion of the slot 508*a-d* dedicated for the transmission of other control signals, or for pilot signals.

The channel allocation format of FIG. 5 may be used for providing multiple access to communications channels for one or more access points, access terminals, or other nodes in a wireless network. The diagram in FIG. 5 is merely illustrative. In a practical system, the specific manner in which each frequency band is partitioned may vary greatly, and the structure and number of the timeslots may differ.

Within each carrier frequency C1 - C4, tones may be transmitted and received by multiple nodes in the network. Nodes requesting network bandwidth may be allocated one or more timeslots and frequencies to transmit and receive data and control information in the manner described above. Data may be transmitted in timeslots 502a, 502b, 502c, or 502d. Within each of the frequency bands C1 through C4, the data may be transmitted and received as tones (not shown) such that a plurality of nodes may simultaneously use the bandwidth of each of these frequency channels to send and receive data.

Blocks 506*a-d* are designated as RUM channels. Individual nodes can transmit RUMs on specific tones within these blocks. For example, in the designated RUM period defined by block 506a on carrier C1, node N1 transmits a RUM ("R") using the tone 510. Within this same carrier C1, one or more additional nodes may also transmit RUMs on other tones. In time period 506*d* on carrier C4, node N5 transmits a RUM using the tone 519.

Control information and pilot signals may be sent in control slots 508*a-d*. In control slot 508*b* on carrier C2, node N2 transmits a grant signal ("G") (for example, in response to a request to transmit) 512, which in practice may comprise a group of tones. In control slot 508c on carrier C3, node N3 sends a request to transmit ("Re") 514. In control slot 508d, node 4 sends a pilot signal ("P") using groups of tones 516 and 518 for frequency diversity. In one configuration, the channel format illustrated in FIG. 5 is used for both the forward link and the reverse link. In other cases, the forward and reverse links may use separate formats.

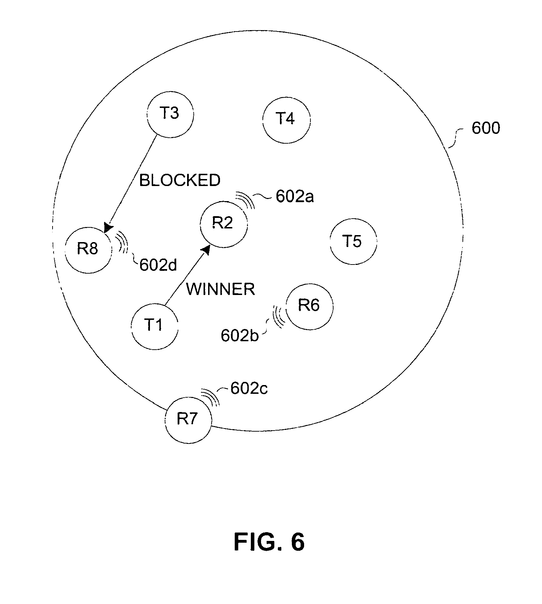

FIG. 6 shows a conceptual diagram of a wireless network 600 that implements a RUM-based interference management scheme. The network 600 includes a plurality of nodes T1, R2, T3, T4, T5, R6, R7 and R8. In the example shown, node T1 has data to transmit to an associated node R2. Node R2, however, is experiencing an unacceptably low quality of service due primarily to transmissions from the neighboring non-associated nodes T3, T4, and T5.

As a result, R2 sends a RUM (illustrated by 602*a*) using a predetermined tone in a carrier frequency on which R2 is experiencing the interference. As discussed further below, the group upon which the RUM is transmitted enables the receiver to determine the relative degree of disadvantage that R2 is experiencing. R6, R7 and R8 may also send out RUMs (602*b-d*) on the same carrier frequency using the appropriate tones. These RUMs contain the respective degrees of disadvantage experienced by R6, R7 and R8.

A degree of disadvantage may be considered in one aspect to be a relative measure of degradation of signal quality experienced by a node either as a result of, or as affected at least in part by, interference from neighboring transmissions. The degree of disadvantage may be expressed in the form of a weight that is indicative, for example, of one or more of the following: (1) a quantized information throughput relative to some acceptable or desired throughput, (2) a carrier-to-interference ratio (C/I), (3) a spectral efficiency, (4) a latency, (5) a data rate, (6) a traffic class, (7) an interference over thermal noise (IOT), (8) some other quality of service measurement, and/or (9) any type of measurement (or relative measurement) that is at least partly indicative of the quality of one or more received signals or of the degradation of signal quality due to (or as affected by) the presence of interfering transmissions.

Nodes T1, T3, T4, and T5 consider all received RUMs, and compare the advertised weights of the RUMs to the weights of RUM(s) sent by their associated nodes. For example, node T1 receives the RUMs transmitted from nodes R6, R7, and R8, considers the respective weights of those RUMs, and compares those weights to the weight of the RUM transmitted by its associated node R2. In this example, a weight associated with one RUM may be higher than, lower than, or the same as that associated with another RUM. For purposes of this example, a higher weight corresponds to a node being more disadvantaged, while a lower weight corresponds to a node being less disadvantaged. As a practical matter, whether a "higher" or "lower" weight is considered to convey a more disadvantaged state or a less disadvantaged state is a matter of nomenclature.

In this case, T1, T3, T4, and T5 each determine that the RUM associated with R2 has the highest weight, indicating the highest degree of disadvantage. Thus, T1 is said to be the "winning" node, because T1 is associated with R2 and has data to transmit to R2. T1 thereupon sends a request to transmit ("REQ") to node R2 along with a message conveying that T1 is the winning node to signal R2 to grant the request to receive data.

Meanwhile, node T3 determines that, based on the weights of the RUM and the received signal quality of node R2, an appropriate response would be to "back off" - i.e., to abstain from transmitting wireless signals (such as "REQ") on the affected carrier for a designated time or number of timeslots, even where, as here, the node otherwise has data to send to an associated node R8. In this example, node T3 is said to be "blocked" because it is configured to defer transmitting a "REQ" to R8 until the interference at R2 is alleviated and/or R8 becomes sufficiently disadvantaged. A similar procedure may be followed with respect to nodes T4 and T5, assuming that they otherwise have data or other wireless signals to transmit to one or more other associated nodes using the same carrier.

This procedure repeats as new RUMs are sent out during subsequent RUM tones. Over time, the weight of R2 may progressively decrease as a result of the increased data throughput accorded by its transmission of prior RUMs and the associated backing off of transmitter T3 (and possibly T4 and T5). Meanwhile, the weights of one or more of R6, R7, and R8 may increase. For example, R8 may be considered to have a lower data throughput since T3 backed off in response to the RUM sent by R2. Eventually, if R8 is sufficiently disadvantaged, R8 may send a RUM using a weight deemed to be the highest weight to which other transmitting nodes will defer. Also, at some point node T1 may begin to back off over time based on RUMs received from non-associated nodes R6, R7 and R8.

This method promotes inter-node fairness by giving different nodes over time the ability to receive data with a satisfactory quality of service, and by according priority to nodes that are severely disadvantaged. In one configuration, the measured weight may also include other factors, such as a priority level of a transmitter, a priority level of a particular data stream, a system override, and the like.

In other configurations, the RUM weight and the nodes' responses thereto may be overridden when warranted by these or similar factors. Allowing for such an override in certain circumstances can result in high priority transmissions not being interrupted based on an artificially rigid adoption of the RUM protocol set forth above.

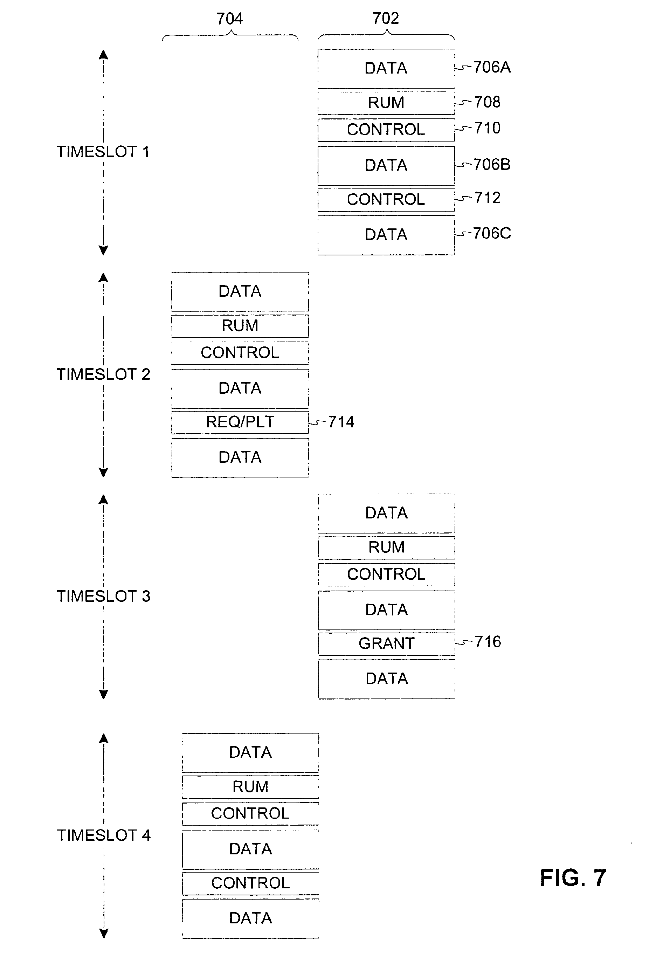

FIG. 7 is a simplified diagram of sequential timeslots during which control information and data between a transmitting node and an associated disadvantaged node are exchanged. In the example of FIG. 7, each of the timeslots includes data portions (*e*.*g*., portions 706A - 706C) and control portions (*e*.*g*., portions 708, 710, and 712). The control portions may be used, for example, in a system that employs a request-grant timeslot transmission control scheme whereby each node may send a message to its associated receiver to request to transmit during an upcoming timeslot.

Referring back to FIG. 1, the nodes 102D and 104B may be associated with one another whereby the node 102D is initially configured to transmit during odd timeslots (e.g., timeslot set 702), while the device 104B is initially configured to transmit during even numbered timeslots (e.g., timeslot set 704). In the event the node 102D has data to transmit to the node 104B, the node 102D may listen to a control channel (e.g., RUM portion 708) during timeslot 1 to determine, for example, whether any other nodes are contending for timeslot 4.

If node 104B is experiencing poor signal quality (such as a low quantified data throughput, a high bit-error rate, *etc*.), node 104B may transmit a RUM during the RUM portion 708 of timeslot 1. In this example, the RUM transmitted by node 104B has the highest weight of any RUM that is transmitted in timeslot 1.

Meanwhile, the node 102D may determine that it can transmit during timeslot 4. The determination may be based on the fact that no RUMs from other nodes were sent or on the fact that the RUM sent from node 104B has a higher weight than any other RUMs sent in the same timeslot. Upon making this determination, the node 102D sends a corresponding request ("REQ") to transmit via a control channel (e.g., control portion 714) during timeslot 2. In accordance with one implementation of the RUM-based scheme discussed above, other neighboring transmitting nodes may not send a request to transmit during timeslot 2, because their associated receiving nodes are less disadvantaged than node 104B.

A request may take various forms. For example, as noted above, a request may include information regarding the timeslot during which data is to be transmitted (e.g., timeslot 4), and information regarding the data that is to be sent (e.g., the type of data and quality of service expectations, transmission rate information, transmit power, and so on). In addition, a pilot signal ("PLT") may be transmitted in conjunction with a request. The pilot signal may be transmitted at a known power spectral density or power level. In this way, upon receipt of the request and the pilot signal, node 104B may determine appropriate transmission parameters for the data transmission during timeslot 4 (*e*.*g*., based on a carrier-to-interference ratio derived from the pilot). Such parameters may include, for example, data transmission rate, modulation and coding.

Thereupon, node 104B may generate a grant message including these parameters and transmit the grant message via a control channel (e.g., control portion 716) during timeslot 3.

Upon reception of the grant, node 102D may format the data to be transmitted according to the designated transmission parameters. Node 102D may then transmit the data during the data portions of timeslot 4. The receiving node 104B may then acknowledge receipt of the data by sending an appropriate control message during timeslot 5, not shown (*e*.*g*., during a control portion corresponding to portion 712 shown in timeslot 1).

It should be appreciated that the above request-grant scheme may be implemented as a sliding cycle so that data may be transmitted during every transmit timeslot. For example, the device 102D may issue a request during timeslot 4 to transmit data during timeslot 6 (not shown), and so on. In a similar manner, for the reverse link, the device 104B may issues requests during timeslots 1 and 3 to transmit data during timeslots 3 and 5, respectively, and so on. In other aspects, data may be transmitted and received in different timeslots other than even and odd timeslots.

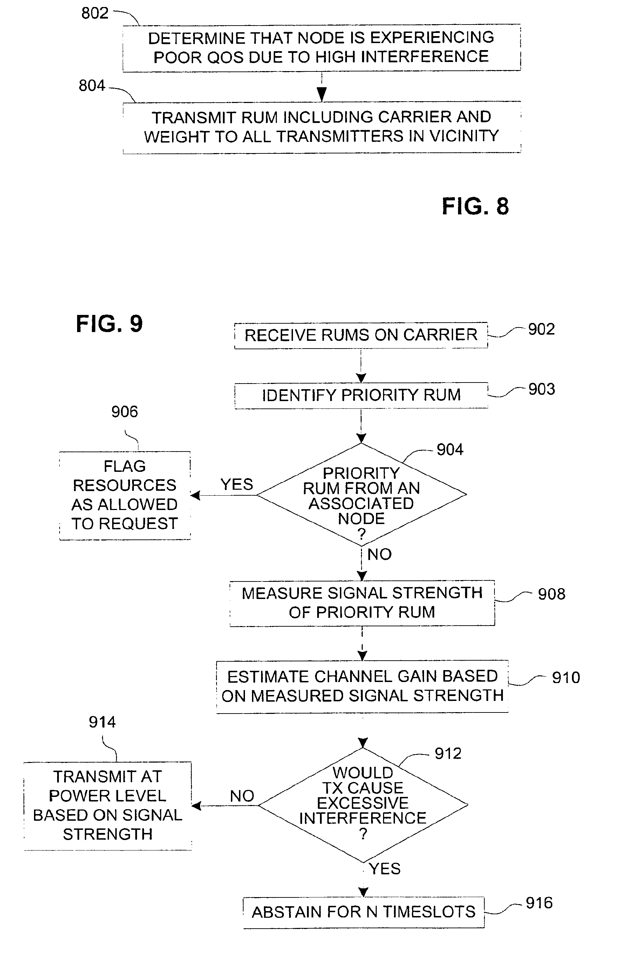

As shown in FIG. 8, the decision of a node to transmit a RUM may involve first determining that a node is experiencing poor quality of service as a result of excessive signal interference (step 802). If the node is experiencing a poor quality of service based on, for example, one of the measures outlined above to quantify degraded signal reception, then the node transmits a RUM on a pre-selected tone to all transmitters in the vicinity (step 804). In an aspect, the RUM may be transmitted over the carrier frequency in which the interference is present, although this is not required.

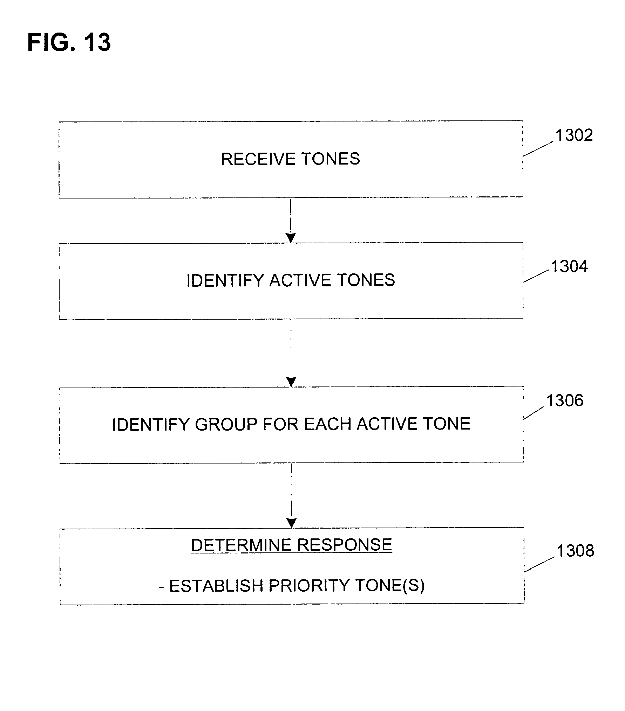

FIG. 9 shows a flow diagram of the illustrative steps performed by a node receiving one or more RUMs. The node receives the RUMs on one of the carriers (step 902) in the form of one or more tones on the carrier, each tone generally corresponding to a single RUM. In one aspect discussed in connection with FIG. 13, below, the receiving node determines that a RUM has been received when it receives an active tone, i.e. a received tone having an energy level that meets or exceeds some established threshold. The threshold is generally some quantified minimum measure of energy established in order to probabilistically avoid interpreting extraneous noise or interference as a received tone.

After comparing the relative weights of the RUMs, the receiving node identifies at least one priority RUM (step 903) having the highest weight of all RUMs sent during a specified period of time. The receiving node next determines whether the priority RUM was sent from an associated node (step 904). If yes, the RUM receiving node flags the resources for which the RUM was received as authorized resources upon which the RUM receiving node is permitted to send requests to transmit (step 906). Conversely, if the priority RUM is not from an associated node, the receiving node in one aspect measures the signal strength of the priority RUM (step 908) and estimates the channel gain to the priority RUM sender based on the measured RUM signal strength (step 910).

The channel gain is used in one aspect to determine an appropriate response to the RUMs. In particular, the RUM receiving node may use the channel gain to determine whether transmitting a signal on the affected resource would result in an unacceptably low signal reception quality due to the interference (step 912). This determination may involve comparing the channel gain to a threshold value. If this comparison reveals that an ensuing transmission by the RUM receiving node would likely cause excessive interference to the node that transmitted the priority RUM, then the RUM receiving node may elect to abstain altogether from transmitting a signal, *e*.*g*., for some determined *n* number of timeslots (step 916).

Alternatively, if transmission is possible at a lower transmit power without unduly interfering with other wireless signals sent to the priority RUM sender, then the receiving node may in one aspect proceed to transmit the anticipated "REQ" (or other signal transmission) to another node using the reduced transmit power. In one aspect, the selected transmission power is based in part on the signal strength of the priority RUM (step 914).

As an illustration, the RUM receiving node may have data to transmit to one of its associated nodes. It is assumed that the RUM receiving node has determined that a minimum transmission power x is necessary to transmit a request "REQ" to another node (*e*.*g*., an associated node that did not transmit the priority tone) at some minimum expected bit-error rate. Additionally it is assumed that the RUM receiving node calculates a maximum power level *y* that can be used to transmit a signal on the applicable carrier without causing the QoS of the priority RUM sender(s) to fall below some designated threshold of acceptability. The calculation of *y* may be based at least in part on the signal strength of the received RUM. With these assumptions, it can be determined that the receiving node may proceed to transmit a subsequent request to its associated node (in spite of the priority RUM) at the reduced power level *x* provided that *y* ≥ *x*. Otherwise, if *y* ≤ *x*, the RUM receiving node abstains from transmitting for a time to avoid unduly causing the QoS of the priority RUM sender to deteriorate.

Various aspects and configurations are possible using the above illustrative protocol. In one aspect, RUM receiving nodes on the network identify a priority RUM in the manner discussed above, and simply refrain, without making further determinations, from transmitting for *n* timeslots to accommodate the priority RUM sender's need for increased signal reception quality.

In other aspects, more than one priority RUM may be identified. Such may be the case where (1) more than one node transmits a RUM associated with the same weight, or (2) two or more non-associated node have weights higher than the highest-weighted associated node. These instances may be handled differently, depending on the situation. In one aspect, discussed more fully below, certain nodes are ordered in levels of relative priority at a more granular level in addition to the ordering by relative weight. In other cases, the RUM receiver may decide randomly, or based on some system criteria, which of the priority RUM senders gets preferential treatment first.

To implement the interference management protocols described above, the RUM receiving nodes must be capable of recognizing RUMs transmitted not only from their associated nodes, but also from non-associated nodes in the vicinity that may be affected by interference resulting from the use of common carrier frequencies. Conventionally, this capability would necessitate full channel estimation for RUM signals received by all nodes (whether or not associated), and coherent detection of the information contained in the RUM signals. The requirement of coherent detection may include procedures like demodulation of the RUM signal as well as descrambling, decoding, and data extraction, and possibly other types of processing.

To accomplish coherent detection of RUM signals from non-affiliated nodes, a RUM receiver would likely need to allocate additional resources for this purpose, including additional processing power and bandwidth to receive and process the RUMs. In short, requiring full channel estimation and coherent detection of signals by the RUM receiver for all nodes (whether or not associated) would likely stand to add yet additional constraints on the already taxed resources of wireless systems.

Accordingly, in one aspect, a method and apparatus for receiving RUMs corresponding to different groups within a carrier frequency is shown. A frequency band for sending and receiving wireless communications is partitioned into tones as discussed above. A plurality of groups are defined, each group comprising a plurality of tones. Each group is associated with and corresponds to a particular weight. A first node in the network establishes a communications link with a second node. A tone may be determined for transmitting a RUM from the second node to the first node at a particular time using a particular channel. Each tone has a weight, as determined by the group in which the RUM is transmitted. In one aspect, a tone in one group is mapped to a corresponding tone in each other group as described below.

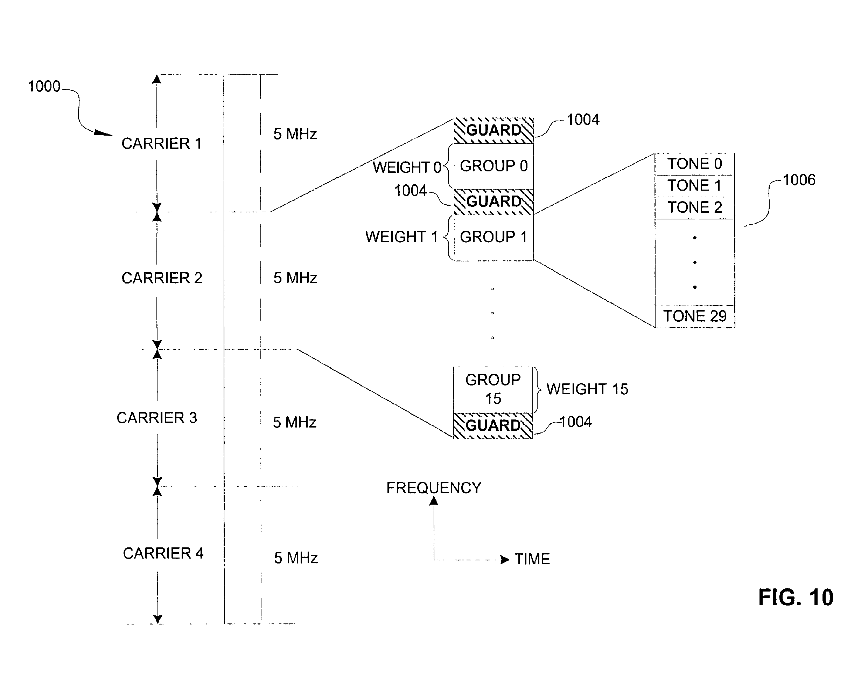

FIG. 10 is a time-frequency diagram 1000 showing an exemplary mapping of groups and tones in a communication system using four frequency bands CARRIER 1, CARRIER 2, CARRIER 3, and CARRIER 4. Frequency is represented on the vertical axis, and time on the horizontal axis as shown. A total bandwidth of 20 MHz is assumed, with each carrier occupying 5 MHz. In accordance with one aspect, each of the carriers is subdivided into groups of tones, as shown explicitly relative to CARRIER 2. In this illustration, each carrier is partitioned into sixteen groups referred to as GROUP 0 through GROUP 15. Guard bands 1004 may be situated between the groups, to minimize both inter-group and inter-carrier signal interference. In one aspect, each of the frequency bands CARRIER 1, CARRIER 3, and CARRIER 4 are likewise partitioned into sixteen corresponding groups GROUP 0 through GROUP 15.

In the illustrated aspect, 512 distinct tones are present within each carrier, and 480 of those tones are available within each carrier for sending RUMs. (The remaining tone space is allocated to the guard bands). Each of the sixteen groups GROUP 0 through GROUP 15 is further divided into 30 tones designated TONE 0 through TONE 29.

Various modulation techniques may be used to transmit information using the available tones. In one aspect, each of the four carriers uses frequency division multiple access (FDMA) to send and receive signals on a selected carrier. Within a particular carrier, orthogonal frequency division multiplexing (OFDM) may be used to transmit signals using different tones. OFDM is a digital modulation technique whereby a carrier is further split into several narrowband channels (or tones) at different frequencies.

Two or more groups may be assigned a distinct weight. Each RUM signal may then be transmitted using a tone having a weight. In one aspect, each group is assigned a different weight. Thus, for example, GROUP 0 is assigned WEIGHT 0, GROUP 1 is assigned WEIGHT 1, and so on. As noted above, the weight corresponds to a degree of disadvantage of the respective RUM transmitter. When a node sends a RUM, the node sends the RUM on a particular tone that its associated node will recognize (discussed below) using the group that corresponds to the intended weight of the tone.

In the example shown, each of the sixteen groups includes the same number of tones. In one aspect, TONE 0 in GROUP 0 has a corresponding TONE 0 in each of GROUP 1 through GROUP 15, such that a node using TONE 0 can transmit a RUM on that tone in any group to show one of 16 possible weights. In other aspects, each group (or a subset of groups) defined within the carrier may include a different number of tones. In other aspects, such as those where the tones in a group do not correspond with those in other groups, two nodes may agree to use a different tone in each group upon which to transmit RUMs. In still another aspect, a node may use two or more tones to transmit a RUM.

In another aspect, one or more of the groups are assigned different meanings that may not directly relate to the weight of a tone. For example, one or more of the groups may be assigned a superseding priority value such that a signal transmitted on a tone in the group is given priority over the other RUMs sent.

In the aspect as described relative to FIG. 10, the information relating to the degree of disadvantage of a RUM sender is conveyed to the RUM receiver by the identity of the group in which the RUM is transmitted. Moreover, as discussed below, the tone upon which the RUM was transmitted may be used to determine whether or not the RUM is from an associated node. Thus, in this aspect, the fact that the RUM signal was transmitted using a particular tone within a particular group is sufficient in itself to convey information about both the identity and the degree of disadvantage of the node. Thus, only energy detection is needed at the RUM receiving node.

In sum, simple energy detection of RUM tones is possible because (1) the weight information is inherent in the group upon which the RUM is transmitted, since the different groups are mapped to different weights, and (2) the identity of the sender of the RUM received can be recognized by an associated node. Conversely, if the RUM is not sent using a tone of an associated sender, then the RUM receiving node can determine that the RUM is from a non-associated node.

When the RUM receiving node receives a tone during a control/RUM portion of a timeslot, the RUM receiver can determine with some probability (based on the possibility that another node selected the same tone) whether the RUM came from one of its associated nodes. An error may occur when the RUM receiver incorrectly detects a RUM on a tone when none was actually sent.

In another aspect, a mechanism for selecting a tone to transmit and receive RUMs is described. To be used for sending a RUM as well as for recognizing a received RUM, a selected tone must be either known or determinable by both the RUM sending node and the RUM receiving node. In one aspect involving two associated nodes, the identity of the tone is determined by one of the two nodes and confirmed by the other node using a handshaking protocol. Subsequent RUMs are transmitted using the selected tone. Alternatively, the tone used by the two associated nodes may be selected by another node, or it may be a system-determined tone, *etc.*

Any method used to the change the tone must be deterministic from the vantage point of the nodes using the method. In one aspect, a tone within a group is selected pseudo-randomly to reduce the frequency of collisions caused by another node that happens to select the same tone for transmitting its RUM. In this aspect, a pseudo-random algorithm may be selected which contains information sufficient for a node to ascertain the identity of a tone that the node should use to transmit a RUM during a RUM control slot. The algorithm may be a mathematical algorithm. Alternatively, the algorithm may be any rule, criterion, or set of criteria sufficient to enable the tone to change in a random or semi-random fashion in each instance of the control slot.

On the RUM receiving side, the algorithm enables the RUM receiving node to determine whether the RUM came from an associated node.

In another aspect, a first node transmits to a second node an initial tone and a rule to change the tone over time (*e*.*g*., every *n* timeslots). The rule in one implementation may utilize a combination of an identifier of one of the associated nodes and a frame number or timeslot number. Using this information, and based on the timeslot number, a RUM sending node can send a RUM in a control slot on the appropriate tone. The RUM receiving node may, in turn, use the rule to determine that the RUM came from an associated node.

A variety of different types of system parameters may be used by two communicating nodes as a basis for selecting a RUM tone. Such parameters include, by way of example, a system time, a frame index, a node identifier, and a link identifier. Use of these and similar parameters in selecting the tone may allow for the tone to vary in essentially a random or semi-random fashion, which may further reduce the frequency of unwanted RUM collisions.

Still other parameters, whether or not unique to the wireless system, may be contemplated for accomplishing a similar result. A random number generator may be used. Yet other configurations may use a special broadcast message or channel to identify an initial tone, to identify an updated tone, or to identify a rule or other criteria for updating a tone as a function of time.

In another aspect, an access point assigns each access terminal that it communicates with a tone and a rule to follow to randomly change the tone. As noted above, changing the tone in this manner helps minimize the occurrence of repeated collisions with another node that may have selected the same location.

Provided that the rule assigned for tone selection is sufficient to enable RUM sending node and RUM receiving node to calculate the proper RUM tone during any given timeslot, the details of the tone selection may vary widely.

Another benefit of the approach describe above relates to the power level that a RUM sending node can achieve. In particular, since energy is placed in just a few tones (*e*.*g*., one tone in the above-described aspect), the RUM transmit power spectral density can be high even for low power transmitters. For instance, if only one tone is used per carrier, then with a maximum power of 200 mW and approximately 10 KHz per tone, a high transmit power spectral density of 200 mW/10 KHz can be achieved.
At these power levels, RUM sending nodes may be able to send RUMs over relatively long distances.

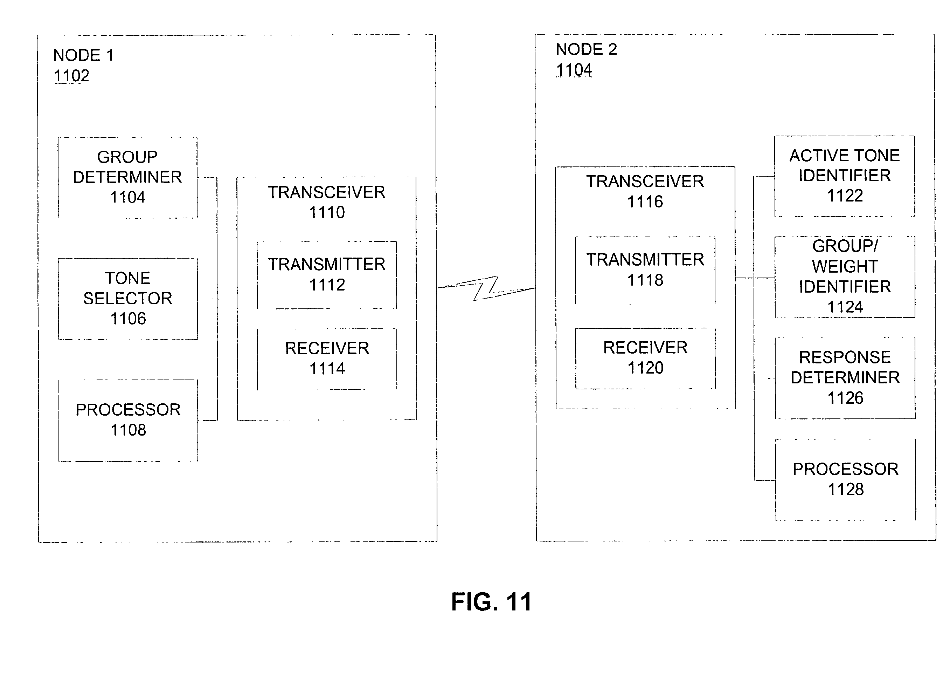

FIG. 11 is a block diagram of a RUM sending node 1102 and a RUM receiving node 1104. FIG. 11 shows various circuit/functional blocks that may be used for transmitting a RUM (NODE 1) and for receiving the RUM (NODE 2). It will be appreciated that the circuit/functional blocks shown are exemplary in nature, and do not exclude either node from being both a RUM sending node and a RUM receiving node.

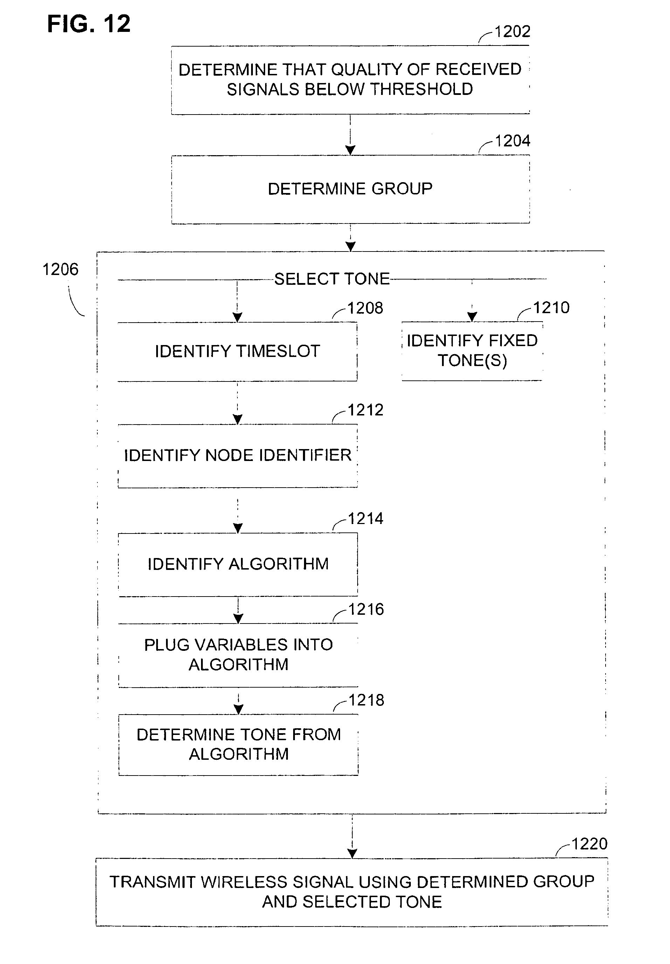

FIG. 12 is a flow diagram illustrating an example where NODE 1 (FIG. 11) sends a RUM to receivers in its vicinity. Initially, NODE 1 determines that the quality of one or more signals received at receiver 1114 falls below some specified threshold (step 1202), thereby necessitating a RUM. Step 1202 may be implemented through various means, including determining a carrier-to-interference ratio, a bit error rate, a quantized throughput, or other means generally used to determine the quality or integrity of a signal received over a network. This measurement may be made, for example, by processor 1108, or by another dedicated circuit or software routine(s) (not shown) at the RUM sending node.

If the measured parameter(s) falls below the threshold, NODE 1 may proceed to determine a group upon which to transmit a RUM (step 1204). In one aspect, NODE 1 first determines an appropriate weight. In the illustration where NODE 1 is an access terminal, a corresponding access point may in some aspects be principally responsible for designating the weight of NODE 1. NODE 1 may have knowledge of this information based on a previous transaction, or it may perform a handshaking routine with the access point to identify the weight.

In another aspect, NODE 1 determines an appropriate weight using, possibly among other parameters, the measured signal quality referenced above. The mechanism for making this determination may be implemented in software by processor 1108, or it may be provided by dedicated hardware. In other aspects, NODE 1 takes one or more other criteria into account in determining the weight, such as, for example, previous quality measurements. In still other aspects, information comprising the measured signal quality may be sent by NODE 1 to another node or source that examines the measurement(s) and sends a determination to NODE 1 of the appropriate weight.

Using any of these techniques (or others) to determine a proper weight, NODE 1 thereupon determines a group corresponding to that weight. This determination may be made by the group determiner functional block 1104, which may include dedicated circuitry or processing circuitry for executing code to determine the group. In one aspect the group determiner 1104 is part of a processing system in which processor 1108 and other processing elements are included. In another aspect group determiner 1104 and processor 1108 may be one in the same.

NODE 1 next selects a tone (step 1206) using tone selector block 1106. In one aspect, the tone that is selected is one that was previously determined to be used for communicating with an associated node. Depending on the specific implementation, the tone may be selected in different ways. For example, in the case where a single RUM tone or set of tones is selected for use in all timeslots, NODE 1 may simply identify the corresponding tone or set of tones (step 1210). Alternatively, in other aspects as discussed above, one or more variables or other parameters may be used in the tone selection progress. Additionally, an algorithm may be used to determine the tone pseudo-randomly in the case where the minimization of collision frequency is deemed particularly desirable.

In one example, a timeslot number, a node identifier, and a pseudo-random algorithm are used to select the tone. NODE 2 1104 (FIG. 11), for instance, may be an access point that communicates the timeslot number, node identifier, and algorithm to NODE 1, an access terminal in this example. Note that in other aspects, this information may be derived from the RUM sending node (NODE 1) or from another source. In addition, NODE 2 may in other aspects be an access terminal and NODE 1 an access point. In still other aspects, additional or different variables may be used (e.g., a frame index, another measurement of system time, a link identifier, and the like) to select the tone.

NODE 1 may thereupon identify a timeslot for transmitting a RUM (step 1208). Using the identified timeslot the known node identifier associated with NODE 2 (step 1212), and the applicable pseudo-random algorithm (steps 1214 and 1216), NODE 2 proceeds to determine the tone that should be used to transmit a RUM in that timeslot (step 1218).

Having determined the group and selected the tone, NODE 1 transmits a wireless signal using the selected tone within the determined group (step 1220).

While the wireless signal in step 1220 and throughout this disclosure is generally referred to as a RUM, it will be appreciated that any signal transmitted upon the determined group using the selected tone qualifies as the wireless signal in accordance with the principles set forth in the present disclosure.

The transmitted wireless signal may be considered to be a broadcast message, because the signal may be broadcast to all wireless nodes in the vicinity.

As described above, when RUMs collide as a result of two or more nodes transmitting a RUM using the same tone, the RUM receiving node may mistakenly conclude that its own associated node sent the RUM. While this false alarm probability may be low, it may be reduced even further if some redundancy is added into the wireless communications links. Such redundancy may include a second wireless transmission. Accordingly, in one aspect, an "echo RUM" is transmitted in addition to the wireless signal in step 1220 (FIG. 12). The echo RUM may be sent as a separate message which may include an identity of the group upon which the associated RUM was/will be transmitted. The RUM receiving node may be configured to use the echo RUM to (1) anticipate an impending RUM on a particular tone in the identified group, (2) confirm previous receipt of a RUM, and/or (3) acknowledge that a RUM was received even though the RUM was not successfully detected. The RUM receiving node may, in turn, determine an appropriate response in light of the echo RUM and other RUMs received.

In one aspect involving the case of an access terminal 104 (FIG. 1), the echo RUM may not be required where the associated access point is configured to determine or store a value for the weight of NODE 1 and possibly other nodes with which the access point is configured to communicate.

In many network implementations, the probably of transmitting two or more RUMs with the same weight on the same carrier is low enough such that the frequency of collisions that do occur is considered to be within the bounds of acceptable performance. In another aspect, to decrease the probability of collisions even further and increase the reliability of receiving RUMs, the RUM process may be further orthogonalized beyond one tone per user. For example, the carriers may be divided into groups as discussed above. Thereupon, the RUM may be defined as (1) more than one tone, or (2) a scrambled sequence of tones in the group. In either case, the tones may be randomly picked, or assigned by another node (such as an access point). In case (2), the sequence may be determined from a set of allowed sequences having a low cross-correlation. In one aspect, Walsh codes may be used to determine the sequence.

In the aspect of FIG. 10, the tones of each group are contiguous in frequency. Thus, if another node that is slightly misaligned in frequency or time transmits a RUM using a tone that overlaps with a RUM from an associated node, the RUM receiving node can still detect the RUM in the correct group even if not the correct sender. Thus, even though an incorrect tone may be received, the RUM receiving node may nevertheless be able to respond to the RUM correctly using the group identifier.

In other aspects, the tones of a group may be interleaved for frequency diversity. That is, two or more tones in a group (or all the tones) may be selected so that the tones are not contiguous in frequency. Frequency diversity generally refers to transmitting a wireless signal simultaneously on two or more frequencies, each of which may be susceptible to frequency fading effects. When there is a fade at one frequency but not the other, the receiver can still recover the signal. This property renders frequency diversity techniques particularly suitable for applications like spread spectrum communications, where fading often affects only a portion of the relevant spectrum.

In one aspect, a RUM receiving node identifies active tones of received tones, identifies the group for each active tone, and determines an appropriate response. FIG. 13 is a flow diagram illustrating a RUM receiving node (such as NODE 2 1104 (FIG. 11)) in the process of receiving a set of RUMs. A plurality of tones are received by NODE 2 on receiver 1120. Thereupon, the active tone identifier 1122 identifies active tones of the received tones (step 1304). An active tone as described herein is a received tone having an energy level that meets or exceeds some established threshold. The threshold may comprise some quantified minimum measure of energy established in order to probabilistically avoid interpreting extraneous noise or interference as a received tone.

In one aspect, NODE 2 performs this step by measuring the signal strengths of the received tones. The measurement of signal strength may be a measurement of power, gain, or any other parameter that is at least partially relevant to the amount of energy received on the tone. The active tone identifier 1122 may compare each of these measured signal strengths to a threshold. Alternatively, the active tone identifier 1122 will identify some condition which must be satisfied by the measured parameter(s). Those meeting or exceeding the threshold, or otherwise satisfying the condition, are determined to be active tones. This determination may be desirable to account for the fact that energy received on a tone at any given time may not necessarily be a RUM. Rather, the received energy may be an artifact of remote transmissions from other wireless devices, simple noise, or other electrical interference. Requiring a minimum energy threshold for received tone before deducing that a RUM is present on the tone allows the designer to determine, within some degree of probability, that the received tone is in fact a RUM.

For each active tone, group/weight identifier 1124 identifies a group in which the active tone was transmitted, which also provides an indicator of the weight of the active tone (step 1306). In some aspects, NODE 2 may already know the weights of active tones used by its associated nodes, such that the process is simplified for any tone received from an associated node.

The response determiner 1126 may determine a response in light of the received active tones (step 1308). The response may include identifying one or more priority tones, and performing some action such as described above with reference to FIGS. 6, 7, and 9. Priority tones are defined herein as one or more active tones identified from a group of active tones, wherein the identification is performed according to some selection criteria that is deemed useful to determine a suitable response for managing interference. For example, in one aspect wherein a plurality of active tones are received, the priority tone(s) may include the active tone(s) having the highest weight. If an active tone from an associated node is received, the priority tones may include this active tone. In other instances, the priority tones may be defined as the highest weighted tones from associated nodes, highest weighted tones from non-associated nodes, or some combination of the two.

In other aspects, the priority tones may comprise a plurality of active tones selected based on (1) one or more active tones from the highest weighted associated node(s), and (2) one or more active tones from non-associated nodes having weights higher than the highest weighted associated node. As a specific illustration, in one network aspect a RUM receiving node may receive five active tones. The two highest weighted active tones may be identified as from a non-associated node. The third highest weighted active tone may be identified as from an associated node. The remaining two active tones may be weighted lower than the first three. In this example, the priority tones may be identified as the two highest weighted active tones.

As earlier described, NODE 2 may simply abstain from transmitting a signal (such as a request to transmit) for a predetermined time on the affected carrier if the determined priority tone is not from an associated node. NODE 2 may also proceed to transmit a signal at a reduced power if, for instance, transmitting the signal at the reduced power level will not unduly interfere with the receipt of subsequent transmissions by the afflicted priority RUM sender. In this latter situation involving two priority tones from non-associated nodes and a lower-weighted active tone from an associated node, the RUM receiving node may measure the relative signal energies of the set of priority tones to determine a response. Based on these measurements, the RUM receiving node may elect to transmit a signal to the associated node at the maximum permissible power that can be used without causing undue interference to the non-associated nodes that transmitted the priority tones. Undue interference may include some quantized measurement such as throughput, data rate, or bit error rate, etc. that can be guaranteed (or that can fall within a degree of probability) to the nodes that transmitted the priority tones, taking into account a transmission by the RUM receiving node.

In other aspects, the priority tones may include the active tones that are transmitted in the same group of the highest weight (and thus each tone has the same weight). Alternative, the priority tones may be identified based on some combination of the above aspects, or some other criteria for achieving a desired interference management scheme. Still other responses may be contemplated depending on the application.

As an illustration, a RUM receiving node may occasionally receive a command signal from another application or node, directing the RUM receiving node to transmit signals containing data at full power in spite of the presence of one or more priority tones. Such an example of superseding the dynamic interference management protocol may occur where the data to be transmitted by the RUM receiving node has been designated high priority data that overrides the priorities created by the RUM protocols in place. Thus, the flexibility of the overall interference management scheme in accordance with the disclosure may be maintained.

Processor 1128 (NODE 2) may perform additional tasks as necessary to process the received tones and to convey needed instructions to the other functional blocks. In one aspect, the blocks 1122, 1124, 1126, and 1128 may comprise circuit blocks or software routines for performing the procedures set forth above. In other aspects, these blocks (and separately, the blocks in NODE 1 1102) may be part of an overall processing system wherein various functions are implemented using dedicated hardware, one or more general purpose processors, application specific integrated circuits (ASICs), software modules, or some combination thereof.

In practice, NODE 1 in FIG. 11 typically contains the functionality of each of blocks 1104, 1106, 1108, 1122, 1124, 1126, and 1128 for implementing both RUM transmitting functions and RUM receiving functions within the same device. The same holds true for NODE 2. However, this need not be the case. In some aspects, the RUM transmitting node may not include RUM receiving circuitry, and vice versa.

In one implementation, processor 1128 contains a pseudo-random generator for generating tones that may be selected for the transmission of RUMs. Information obtained from processor 1128 may be communicated to NODE 1 through receiver 1114. Alternatively, processor 1108 may include a similar or substantially identical pseudo-random generator which may be used to select the correct tone upon which to transmit a RUM in any given timeslot. In other aspects, NODE 1 and NODE 2 contain analogous circuitry or software modules for identifying criteria for selecting the tone. NODE 2 may use the generated rule or a pseudo-random algorithm for tone selection. An illustration of this procedure is described above with reference to FIG. 12.

The above aspects leave open the possibility that two or more afflicted nodes may send RUMs within the same group. In this situation, the RUM receiving node needs to determine an appropriate response. In the case where the identified group corresponds to a weight that is lower than the highest weight of all RUMs transmitted during the applicable timeslot, then the approach set forth in FIG. 9 may be used without further consideration. However, if the group in which the two or more tones were sent is associated with the highest weight, then it may be unclear to the RUM receiving node which node should be accorded priority over the other. This is particularly true if the one of the RUM transmitting nodes is an associated node and the other is not.

Therefore tones may also be ordered within each group.

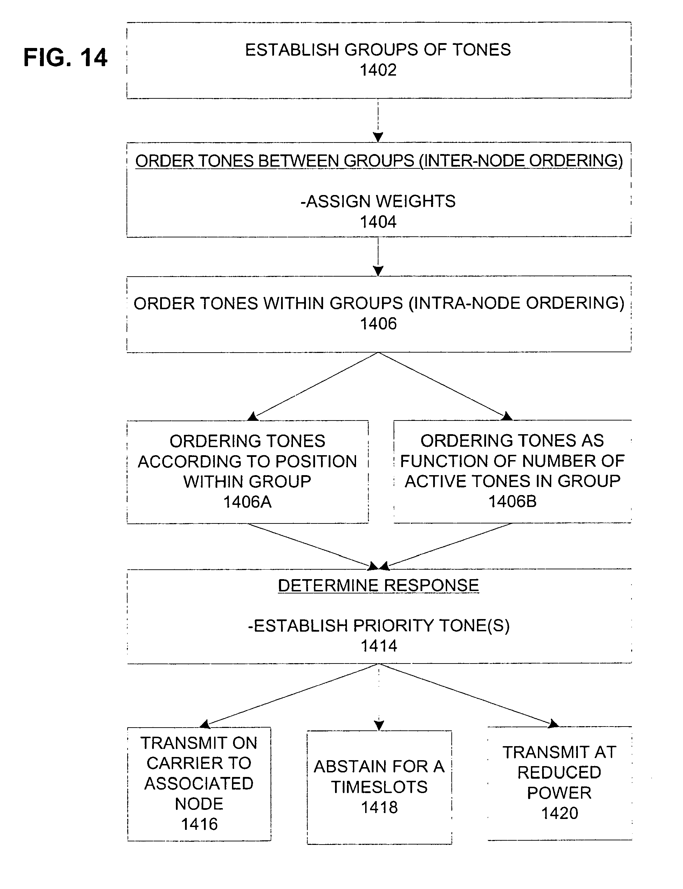

FIG. 14 is a flow diagram illustrating an ordering of tones. The ordering may be performed dynamically by a node in the network such as an access point. Alternatively, the ordering may be determined on a system level and communicated via a broadcast message or through other suitable means, for example specified by a function. The determination may be made either upon initialization of the communication system, or dynamically on the fly.

The allocated carrier bandwidth is first segregated into groups of tones (step 1402) for each carrier as previously described. An example of such a format is presented above with respect to FIG. 10. The tones in two or more groups may then be assigned different weights (step 1404). In this manner, an inter-node ordering scheme is realized whereby tones within a group are ordered relative to tones in one or more other groups. Next, intra-group ordering is performed in which tones are ordered within the respective group to which they correspond (step 1406). Thereafter, the receiving nodes may determine a response to the RUMs (step 1414), including establishing one or more priority tones as discussed above. The response may be to proceed with a transmission to an associated node (block 1416), abstain from transmitting (block 1418), or transmit at a reduced power (block 1420).

Intra-group ordering may be accomplished in a variety of ways, two of which are illustrated in the context of steps 1406A and 1406B. In one way, tones are ordered according to their position within a group (step 1406A). This ordering may be performed, for example by the RUM receiving node upon receiving one or more active tones.

For the example in FIG. 10, GROUP 1 includes TONE 0 through TONE 29, which may be contiguous in frequency. In a simple scenario, TONE 0 is associated with the lowest order, up to TONE 29 which is associated with the highest order. As an illustration of this ordering method, a RUM receiving node may receive the active tones TONE 5 and TONE 8 from two non-associated nodes in GROUP 1. In assessing the overall priority tones, the RUM receiving node may be configured to accord the node corresponding to TONE 8 priority since it is higher in number. It is equally feasible that the lower positioned tones may be viewed as higher priority tones.

In other aspects priority position with a given group may be determined randomly, or using a fixed sequence, e.g., a random permutation that varies with time, i.e., instead of varying the tone used to send in the group, the tone is fixed and the ordering of the tones within a group is varied.

The above procedures may become useful as part of an overall system design. In the aspect described earlier where tones are selected in a pseudo-random pattern, each of the nodes will be accorded fair treatment in a roughly round-robin manner based on the assumption that the nodes will randomly select lower tones approximately half of the time for use as the RUM tone, and higher tones approximately the other half. In other aspects, an access point or another system element may establish a rule for assigning different nodes with a fixed RUM tone (e.g., TONE 15). Alternatively, the access point may randomly assign, to nodes deemed to have a higher general priority, a RUM tone within a defined smaller body of RUM tones from higher positions (e.g., a random tone may be selected from the subset of tones labeled TONE 15 - TONE 29). The same rule may be made for nodes deemed to require only lower priority tones (e.g., TONE 0 - TONE 14).

In an alternative aspect, a RUM receiving node orders active tones received in a group as a function of the number of active tones present in the group (step 1406B). For example, if a node receives four active tones in one group, then the node's processing circuitry can probabilistically decide if each of the four active tones is higher than some selected comparison tone.

As an illustration, the comparison tone may be selected such that a probability of ¼ exists that each active tone is higher than the selected tone. One or more priority tones may thereupon be established based on this determination. In the case where one of the active tones is determined to be from an associated node, the receiving node may use this technique to determine whether to respond to each of the RUMs or alternatively, to ignore one, some, or all of them.

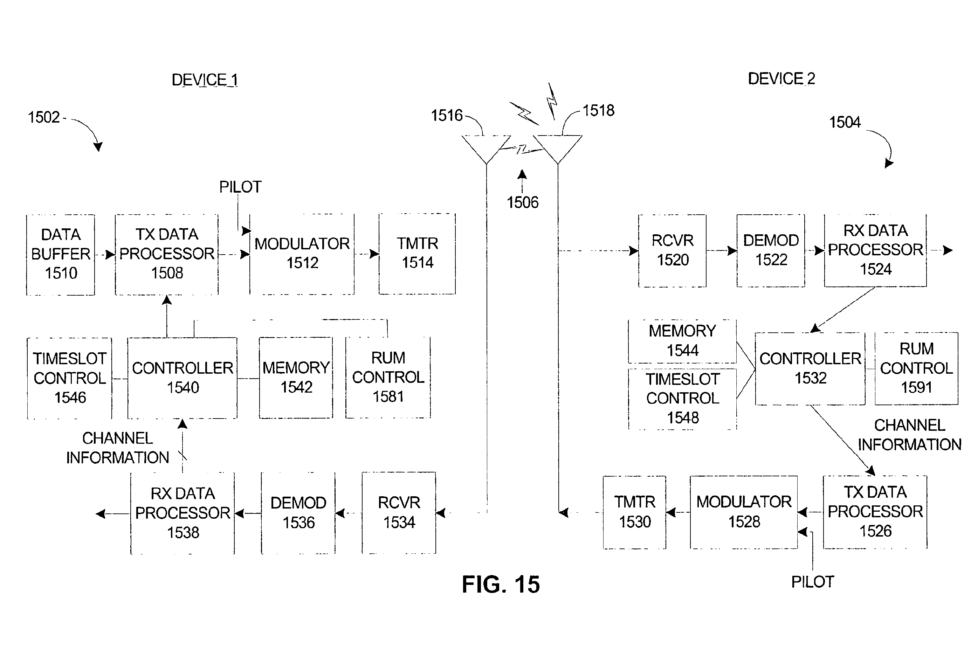

The teachings herein may be incorporated into a device employing various components for communicating with at least one other wireless device. FIG. 15 depicts several sample components that may be employed to facilitate communication between devices. Here, a first device 1502 (e.g., an access terminal) and a second device 1504 (e.g., an access point) are adapted to communicate via a wireless communication link 1506 over a suitable medium.

Initially, components involved in sending information from the device 1502 to the device 1504 (e.g., a reverse link) will be treated. A transmit ("TX") data processor 1508 receives traffic data (e.g., data packets) from a data buffer 1510 or some other suitable component. The transmit data processor 1508 processes (*e*.*g*., encodes, interleaves, and symbol maps) each data packet based on a selected coding and modulation scheme, and provides data symbols. In general, a data symbol is a modulation symbol for data, and a pilot symbol is a modulation symbol for a pilot (which is known a priori). A modulator 1512 receives the data symbols, pilot symbols, and possibly signaling for the reverse link, and performs modulation (e.g., OFDM or some other suitable modulation) and/or other processing as specified by the system, and provides a stream of output chips. A transmitter ("TMTR") 1514 processes (*e*.*g*., converts to analog, filters, amplifies, and frequency upconverts) the output chip stream and generates a modulated signal, which is then transmitted from an antenna 1516.

The modulated signals transmitted by the device 1502 (along with signals from other devices in communication with the device 1504) are received by an antenna 1518 of the device 1504. A receiver ("RCVR") 1520 processes (e.g., conditions, frequency downconverts and digitizes) the received signal from the antenna 1518 and provides received samples. A demodulator ("DEMOD") 1522 processes (e.g., demodulates and detects) the received samples and provides detected data symbols, which may be a noisy estimate of the data symbols transmitted to the device 1504 by the other device(s). A receive ("RX") data processor 1524 processes (e.g., symbol demaps, deinterleaves, and decodes) the detected data symbols and provides decoded data associated with each transmitting device (e.g., device 1502).

Components involved in sending information from the device 1504 to the device 1502 (e.g., a forward link) will be now be treated. At the device 1504, traffic data is processed by a transmit ("TX") data processor 1526 to generate data symbols. A modulator 1528 receives the data symbols, pilot symbols, and signaling for the forward link, performs modulation (e.g., OFDM or some other suitable modulation) and/or other pertinent processing, and provides an output chip stream, which is further conditioned by a transmitter ("TMTR") 1530 and transmitted from the antenna 1518. In some implementations signaling for the forward link may include power control commands and other information (e.g., relating to a communication channel) generated by a controller 1532 for all devices (e.g. terminals) transmitting on the reverse link to the device 1504.

At the device 1502, the modulated signal transmitted by the device 1504 is received by the antenna 1516, conditioned and digitized by a receiver ("RCVR") 1534, and processed by a demodulator ("DEMOD") 1536 to obtain detected data symbols. A receive ("RX") data processor 1538 processes the detected data symbols and provides decoded data for the device 1502 and the forward link signaling. A controller 1540 receives power control commands and other information to control data transmission and to control transmit power on the reverse link to the device 1504.

The controllers 1540 and 1532 direct various operations of the device 1502 and the device 1504, respectively. For example, a controller may determine an appropriate filter, reporting information about the filter, and decode information using a filter. Data memories 1542 and 1544 may store program codes and data used by the controllers 1540 and 1532, respectively.

FIG. 15 also illustrates that the devices 1502 and 1504 may include one or more components that perform timeslot designation operations as taught herein. For example, a timeslot control component 1546 may cooperate with the controller 1540 and/or other components of the device 1502 to send and receive signals to another device (e.g., device 1504) as taught herein. Similarly, a timeslot control component 1548 may cooperate with the controller 1532 and/or other components of the device 1504 to send and receive signals to another device (e.g., device 1502).

Additionally, FIG. 15 illustrations that the devices 1502 and 1504 may also include RUM control components 1581 and 1591, which may perform the various functions of executing RUM protocols, determining groups, selecting tones, determining active tones, determining responses, *etc*., in accordance with the teachings herein.

The teachings herein may be incorporated into (e.g., implemented within or performed by) a variety of apparatuses (e.g., devices). For example, each node may be configured, or referred to in the art, as an access point ("AP"), NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology. An access point may include a network device, or communication hub, that connects one or more wireless devices to a wired network. An access terminal may include a wireless device, such as a mobile or cordless phone, handheld or laptop computer, personal digital assistant, wireless e-mail device or other similar device, for sending and/or receiving wireless signals to and from an access point. Certain nodes also may be referred to as subscriber stations. A subscriber station also may be known as a subscriber unit, a mobile station, a remote station, a remote terminal, an access terminal, a user terminal, a user agent, a user device, or user equipment. In some implementations a subscriber station may comprise a cellular telephone, a cordless telephone, a Session Initiation Protocol ("SIP") phone, a wireless local loop ("WLL") station, a personal digital assistant ("PDA"), a pager, a handheld device having wireless connection capability, or some other suitable processing device connected to a wireless modem. Accordingly, one or more aspects taught herein may be incorporated into a phone (e.g., a cellular phone or smart phone), a computer (e.g., a laptop), a portable communication device, a portable computing device (e.g., a personal data assistant), an entertainment device (e.g., a music or video device, or a satellite radio), a global positioning system device, or any other suitable device that is configured to communicate via a wireless medium.

As mentioned above, in some aspects a wireless node may comprise an access device (e.g., a cellular or Wi-Fi access point) for a communication system. Such an access device may provide, for example, connectivity for or to a network (e.g., a wide area network such as the Internet or a cellular network) via a wired or wireless communication link. Accordingly, the access device may enable another device (e.g., a Wi-Fi station) to access the network or some other functionality.

A wireless node may thus include various components that perform functions based on data transmitted by or received at the wireless node. For example, an access point and an access terminal may include an antenna for transmitting and receiving signals (e.g., messages including control, data, or both). An access point also may include a traffic manager configured to manage data traffic flows that its receiver receives from a plurality of wireless nodes or that its transmitter transmits to a plurality of wireless nodes. In addition, an access terminal may include a user interface adapted to output an indication based on received data.

A wireless device may communicate via one or more wireless communication links that are based on or otherwise support any suitable wireless communication technology. For example, in some aspects a wireless device may associate with a network. In some aspects the network may comprise a body area network or a personal area network (e.g., an ultra-wideband network). In some aspects the network may comprise a local area network or a wide area network. A wireless device may support or otherwise use one or more of a variety of wireless communication technologies, protocols, or standards such as, for example, CDMA, TDMA, OFDM, OFDMA, WiMAX, and Wi-Fi, and others. Similarly, a wireless device may support or otherwise use one or more of a variety of corresponding modulation or multiplexing schemes. A wireless device may thus include appropriate components (e.g., air interfaces) to establish and communicate via one or more wireless communication links using the above or other wireless communication technologies. For example, a device may comprise a wireless transceiver (e.g., transceivers 1110 and 1116 of FIG. 11) with associated transmitter and receiver components (e.g., transmitters 1112 and 1118 and receivers 1114 and 1120) that may include various components (e.g., signal generators and signal processors) that facilitate communication over a wireless medium.

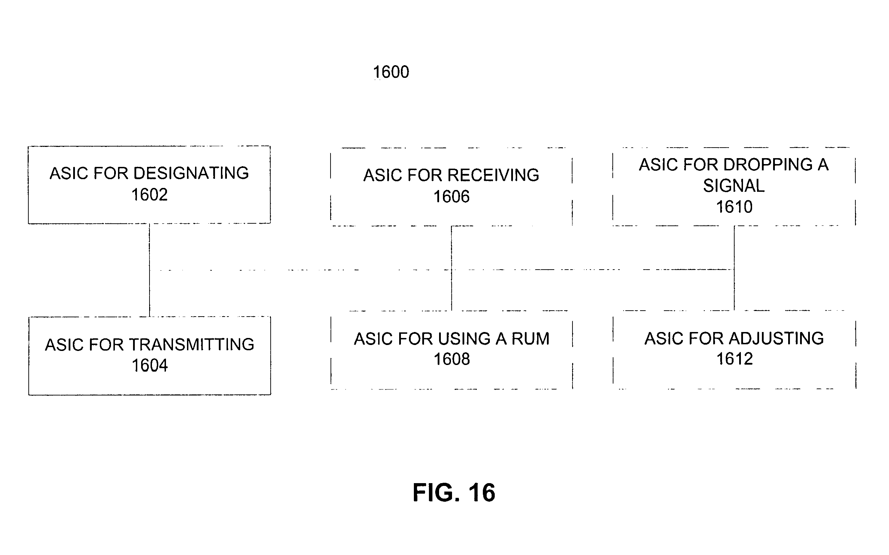

The components described herein may be implemented in a variety of ways. Referring to FIG. 16, an apparatus 1600 is represented as a series of interrelated functional blocks that may represent functions implemented by, for example, one or more integrated circuits (e.g., an ASIC) or may be implemented in some other manner as taught herein. As discussed herein, an integrated circuit may include a processor, software, other components, or some combination thereof.

The apparatus 1600 may include one or more modules that may perform one or more of the functions described above with regard to various figures. For example, an ASIC for determining groups 1602 may correspond to, for example, group determiner 1104 in FIG. 11. An ASIC for transmitting 1604 may correspond to, for example, a transmitter as discussed herein. An ASIC for selecting tones 1606 may correspond to, for example, a tone selector in FIG. 11. An ASIC for receiving tones may correspond to, for example, a receiver as discussed herein. An ASIC for identifying active tones may correspond to, for example, active tone identifier 1122 in FIG. 11. An ASIC for identifying groups 1612 may correspond to, for example, group/weight identifier 1124 in FIG. 11. An ASIC for determining a response 1620 may correspond to, for example, response determiner 1126 in FIG. 11.

As noted above, in some aspects these components may be implemented via appropriate processor components. These processor components may in some aspects be implemented, at least in part, using structure as taught herein. In some aspects a processor may be adapted to implement a portion or all of the functionality of one or more of these components. In some aspects one or more of the components represented by dashed boxes are optional.

As noted above, the apparatus 1600 may comprise one or more integrated circuits. For example, in some aspects a single integrated circuit may implement the functionality of one or more of the illustrated components, while in other aspects more than one integrated circuit may implement the functionality of one or more of the illustrated components.

In addition, the components and functions represented by FIG. 16 as well as other components and functions described herein, may be implemented using any suitable means. Such means also may be implemented, at least in part, using corresponding structure as taught herein. For example, the components described above in conjunction with the "ASIC for" components of FIG. 16 also may correspond to similarly designated "means for" functionality. Thus, in some aspects one or more of such means may be implemented using one or more of processor components, integrated circuits, or other suitable structure as taught herein.

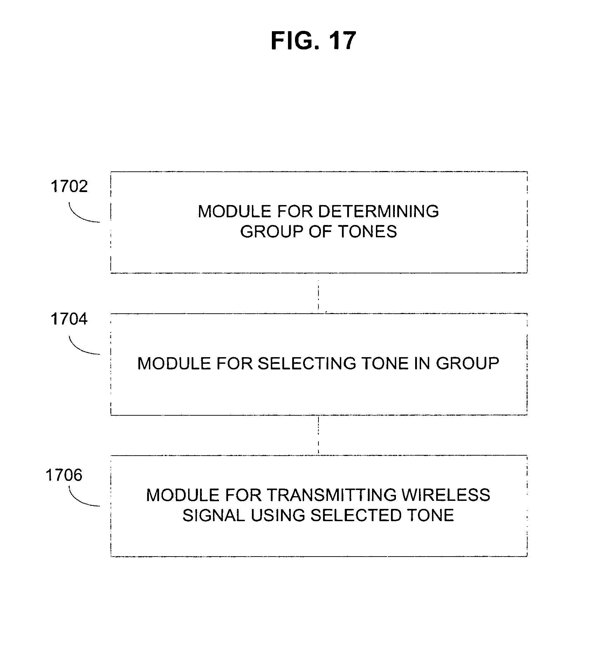

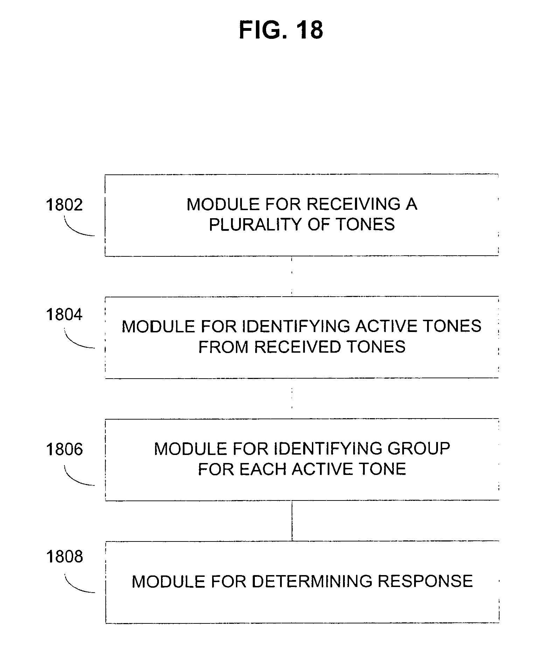

FIG. 17 is a block diagram of a set of modules for transmitting a wireless signal on a selected tone in accordance with an aspect of the disclosure. Module 1702 determines a group of tones. Module 1704 selects one of the tones in the determined group. Thereupon, module 1706 transmits a wireless signal using the tone. FIG. 18 is a block diagram of a set of modules for determining a response based on receiving a plurality of tones. Module 1802 receives a plurality of tones. Module 1804 identifies active tones from the received tones as described above. Module 1806 identifies the corresponding group for each active tone. Module 1808 determines an appropriate response.

The modules in FIGS. 17 and 18 may include a processing system of one or more general purpose or dedicating processors or processing circuits. Alternatively, the modules may be implemented in part or in whole using dedicated integrated circuits, ASICs, or other analog or digital circuit types. The modules may also include or may be used in connection with wireless components including transmitters, receivers, transceivers, filters, amplifiers, digital to analog converters, analog to digital converters, modulation circuits, spreading circuits, oscillators, phase-locked loops, or any other such components that one skilled in the art would recognize may be used to implement the methods disclosed herein. In addition, the modules may be software modules, which may include code resident in memory or stored on a medium such as a tape, CD, DVD, disk, hard drive, or other suitable storage medium.

It should be understood that any reference to an element herein using a designation such as "first," "second," and so forth does not generally limit the quantity or order of those elements. Rather, these designations may be used herein as a convenient method of distinguishing between two or more elements or instances of an element. Thus, a reference to first and second elements does not mean that only two elements may be employed there, or that the first element must precede the second element in some manner. Also, unless stated otherwise a set of elements may comprise one or more elements.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that any of the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes (e.g., executable by at least one computer) relating to one or more of the aspects of the disclosure. In some aspects a computer program product may comprise packaging materials.
[0001] The processing system referred to in this disclosure may include one or more processors. A processor may be a general purpose microprocessor, a microcontroller, a Digital Signal Processor (DSP), an Application Specific Integrated Circuit (ASIC), a Field Programmable Gate Array (FPGA), a Programmable Logic Device (PLD), logic circuits, discrete hardware components, or any other suitable entity that can perform calculations or other manipulations of information.

The processing system may also include one or more machine-readable media provide data storage and/or to support software applications. Software shall be construed broadly to mean instructions, programs, code, or any other electronic media content whether referred to as software, firmware, middleware, microcode, hardware description language, or otherwise. Machine-readable media may include storage integrated with a processor, such as might be the case with an ASIC. Machine-readable media may also include storage external to a processor, such as a Random Access Memory (RAM), a flash memory, a Read Only Memory (ROM), a Programmable Read-Only Memory (PROM), an Erasable PROM (EPROM), registers, a hard disk, a removable disk, a CD-ROM, a DVD, or any other suitable storage device. In addition, machine-readable media may include a transmission line or a carrier wave that encodes a data signal. Those skilled in the art will recognize how best to implement the described functionality for the processing system.

The previous description of the disclosed aspects is provided to enable any person skilled in the art to make or use the present disclosure. Various modifications to these aspects will be readily apparent to those skilled in the art, and the generic principles defined herein may be applied to other aspects without departing from the scope of the disclosure. Thus, the present disclosure is not intended to be limited to the aspects shown herein but is to be accorded the widest scope consistent with the principles and novel features disclosed herein.

## Claims

1. A method of wireless communications comprising:
determining a group of tones from a plurality of groups of tones;
selecting a tone in the group; and
transmitting a wireless signal using the tone.

2. The method of claim 1 wherein the tone is selected as a function of one or more of a system time, a frame index, a node identifier, and a link identifier.

3. The method of claim 1 wherein the selection comprises selecting the tone pseudo-randomly.

4. The method of claim 1 wherein the tone is selected based on input from another node.

5. The method of claim 1 wherein at least two groups of the plurality of groups of tones comprise one of the same number of tones or different numbers of tones.

6. The method of claim 1 wherein the wireless signal comprises a broadcast signal.

7. The method of claim 1 wherein each group corresponds to a weight, wherein at least one of the weights is different from another.

8. The method of claim 7 wherein the weight comprises a measure of one or more of an interference over thermal noise (IOT), a carrier-to-interference ratio (C/I), a spectral efficiency, a latency, a data rate, a throughput, and a traffic class.

9. The method of claim 4 further comprising transmitting another wireless signal to the another node, the another wireless signal comprising an identity of the group.

10. The method of claim 1 wherein at least one group of the plurality of groups of tones comprises one of: all the tones of the group are contiguous in frequency or not all of the tones of the group are contiguous in frequency.

11. An apparatus for wireless communications, comprising:
a processing system configured to determine a group of tones from a plurality of groups of tones, select a tone in the group, and transmit a wireless signal using the tone.

12. The apparatus of claim 11 wherein the tone is selected as a function of one or more of a system time, a frame index, a node identifier, and a link identifier.

13. The apparatus of claim 11 wherein the selection comprises selecting the tone pseudo-randomly.

14. The apparatus of claim 11 wherein the tone is selected based on input from another node.

15. The apparatus of claim 11 wherein at least two groups of the plurality of groups of tones comprise one of: the same number of tones or different numbers of tones.

16. The apparatus of claim 11 wherein the wireless signal comprises a broadcast signal.

17. The apparatus of claim 11 wherein each group corresponds to a weight, wherein at least one of the weights is different from another.

18. The apparatus of claim 17 wherein the weight comprises a measure of one or more of an interference over thermal noise (IOT), a carrier-to-interference ratio (C/I), a spectral efficiency, a latency, a data rate, a throughput, and a traffic class.

19. The apparatus of claim 14 wherein the processing system is further configured to transmit another wireless signal to the another node, the another wireless signal comprising an identity of the group.

20. The apparatus of claim 11 wherein at least one group of the plurality of groups of tones comprises one of: all the tones of the group are contiguous in frequency or not all of the tones of the group are contiguous in frequency.

21. An apparatus for wireless communications, comprising:
means for determining a group of tones from a plurality of groups of tones;
means for selecting a tone in the group; and
means for transmitting a wireless signal using the tone.

22. The apparatus of claim 21 wherein the tone is selected as a function of one or more of a system time, a frame index, a node identifier, and a link identifier.

23. The apparatus of claim 21 wherein the selection comprises selecting the tone pseudo-randomly.

24. The apparatus of claim 21 wherein the tone is selected based on input from another node.

25. The apparatus of claim 21 wherein at least two groups of the plurality of groups of tones comprise one of: the same number of tones or different numbers of tones.

26. The apparatus of claim 21 wherein the wireless signal comprises a broadcast signal.

27. The apparatus of claim 21 wherein each group corresponds to a weight, wherein at least one of the weights is different from another.

28. The apparatus of claim 27 wherein the weight comprises a measure of one or more of an interference over thermal noise (IOT), a carrier-to-interference ratio (C/I), a spectral efficiency, a latency, a data rate, a throughput, and a traffic class.

29. The apparatus of claim 24 further comprising means for transmitting another wireless signal to the another node, the another wireless signal comprising an identity of the group.

30. The apparatus of claim 21 wherein at least one group of the plurality of groups of tones comprises one of: all the tones of the group are contiguous in frequency or not all of the tones of the group are contiguous in frequency.

31. An access terminal comprising:
an antenna;
a screen for providing a user interface;
one or more input keys for displaying symbols on the screen; and
a processing system configured to determine a group of tones from a plurality of groups of tones, select a tone in the group, and transmit from the antenna a wireless signal using the tone.

32. An access point comprising:
an antenna;
a transmitter configured to transmit wireless signals on the antenna; and
a processing system configured to determine a group of tones from a plurality of groups of tones, select a tone in the group, and transmit from the transmitter the wireless signal using the tone.

33. A method of wireless communications comprising:
receiving a plurality of tones;
identifying as active tones the received tones that comprise a measure of energy satisfying a condition;
identifying a group for each active tone, each group comprising a weight; and
determining a response based on the weights of the active tones.

34. The method of claim 33 wherein the weights comprise a measure of one or more of an interference over thermal noise (IOT), a carrier-to-interference ratio (C/I), a spectral efficiency, a latency, a data rate, a throughput, and a traffic class.

35. The method of claim 33 further comprising identifying whether each of the active tones is received from an associated node.

36. The method of claim 33 wherein the determining the response further comprises establishing one or more priority tones from the active tones based on the weights.

37. The method of claim 36 wherein the response comprises one of:
(a) abstaining from transmitting for a time on a frequency band over which the one or more priority tones are received; and
(b) transmitting a signal on the frequency band at a power based in part on the measure of energy of the one or more priority tones.

38. The method of claim 36 wherein the determining the response further comprises determining that the one or more priority tones comprise a weight indicating a greater degree of disadvantage than any active tone received from an associated node.

39. The method of claim 36 wherein the establishing further comprises determining that the one or more active tones are received from non-associated nodes.

40. The method of claim 33 further comprising receiving from an associated node a wireless signal comprising an identity of the corresponding group.

41. The method of claim 35 wherein identifying an active tone as received from an associated node is a function of one or more of a system time, a frame index, a node identifier, and a link identifier.

42. The method of claim 35 wherein a pseudo-random formula is used to identify an active tone as received from an associated node.

43. The method of claim 33 wherein at least two of the identified groups comprise one of: the same number of tones and different numbers of tones.

44. The method of claim 33 wherein a plurality of active tones that correspond to a single group are one of: all contiguous and not all contiguous.

45. The method of claim 33 comprising ordering the active tones within each group.

46. The method of claim 45 wherein a plurality of active tones corresponding to one of the groups are ordered according to a position of each active tone within the corresponding group.

47. The method of claim 45 wherein a plurality of active tones corresponding to one of the groups are ordered as a function of a number of the active tones within the corresponding group.

48. An apparatus for wireless communications, comprising:
a processing system configured to receive a plurality of tones, identify as active tones the received tones that comprise a measure of energy satisfying a condition, identify a group for each active tone, each group comprising a weight, and determine a response based on the weights of the active tones.

49. The apparatus of claim 48 wherein the weights comprise a measure of one or more of an interference over thermal noise (IOT), a carrier-to-interference ratio (C/I), a spectral efficiency, a latency, a data rate, a throughput, and a traffic class.

50. The apparatus of claim 48 wherein the processing system is further configured to identify whether each of the active tones is received from an associated node.

51. The apparatus of claim 48 wherein the determining the response further comprises establishing one or more priority tones from the active tones based on the weights.

52. The apparatus of claim 51 wherein the response comprises one of:
(a) abstaining from transmitting for a time on a frequency band over which the one or more priority tones are received; and
(b) transmitting a signal on the frequency band at a power based in part on the measure of energy of the one or more priority tones.

53. The apparatus of claim 51 wherein the determining the response further comprises determining that the one or more priority tones comprise a weight indicating a greater degree of disadvantage than any active tone received from an associated node.

54. The apparatus of claim 51 wherein the establishing further comprises determining that the one or more active tones are received from non-associated nodes.

55. The apparatus of claim 48 wherein the processing system is further configured to receive from an associated node a wireless signal comprising an identity of the corresponding group.

56. The apparatus of claim 50 wherein identifying an active tone as received from an associated node is a function of one or more of a system time, a frame index, a node identifier, and a link identifier.

57. The apparatus of claim 50 wherein a pseudo-random formula is used to identify an active tone as received from an associated node.

58. The apparatus of claim 48 wherein at least two of the identified groups comprise one of: the same number of tones and different numbers of tones.

59. The apparatus of claim 48 wherein a plurality of active tones that correspond to a single group are one of: all contiguous and not all contiguous.

60. The apparatus of claim 48 wherein the processing system is further configured to order the active tones within each group.

61. The apparatus of claim 60 wherein a plurality of active tones corresponding to one of the groups are ordered according to a position of each active tone within the corresponding group.

62. The apparatus of claim 60 wherein a plurality of active tones corresponding to one of the groups are ordered as a function of a number of the active tones within the corresponding group.

63. An apparatus for wireless communications comprising:
means for receiving a plurality of tones;
means for identifying as active tones the received tones that comprise a measure of energy satisfying a condition;
means for identifying a group for each active tone, each group comprising a weight; and
means for determining a response based on the weights of the active tones.

64. The apparatus of claim 63 wherein the weights comprise a measure of one or more of an interference over thermal noise (IOT), a carrier-to-interference ratio (C/I), a spectral efficiency, a latency, a data rate, a throughput, and a traffic class.

65. The apparatus of claim 63 further comprising means for identifying whether each of the active tones is received from an associated node.

66. The apparatus of claim 63 wherein the determining the response further comprises establishing one or more priority tones from the active tones based on the weights.

67. The apparatus of claim 66 wherein the response comprises one of:
(a) abstaining from transmitting for a time on a frequency band over which the one or more priority tones are received; and
(b) transmitting a signal on the frequency band at a power based in part on the measure of energy of the one or more priority tones.

68. The apparatus of claim 66 wherein the determining the response further comprises determining that the one or more priority tones comprise a weight indicating a greater degree of disadvantage than any active tone received from an associated node.

69. The apparatus of claim 66 wherein the means for establishing further comprises means for determining that the one or more active tones are received from non-associated nodes.

70. The apparatus of claim 63 further comprising means for receiving from an associated node a wireless signal comprising an identity of the corresponding group.

71. The apparatus of claim 65 wherein identifying an active tone as received from an associated node is a function of one or more of a system time, a frame index, a node identifier, and a link identifier.

72. The apparatus of claim 65 wherein a pseudo-random formula is used to identify an active tone as received from an associated node.

73. The apparatus of claim 63 wherein at least two of the identified groups comprise one of: the same number of tones and different numbers of tones.

74. The apparatus of claim 63 wherein a plurality of active tones that correspond to a single group are one of: all contiguous and not all contiguous.

75. The apparatus of claim 63 further comprising means for ordering the active tones within each group.

76. The apparatus of claim 75 wherein a plurality of active tones corresponding to one of the groups are ordered according to a position of each active tone within the corresponding group.

77. The apparatus of claim 76 wherein a plurality of active tones corresponding to one of the groups are ordered as a function of a number of the active tones within the corresponding group.

78. An access terminal comprising:
a screen for providing a user interface;
one or more input keys for displaying symbols on the screen;
a receiver configured to receive a plurality of tones; and
a processing system configured to identify as active tones the received tones that comprise a measure of energy satisfying a condition, identify a group for each active tone, each group comprising a weight, and determine a response based on the weights of the active tones.

79. An access point comprising:
an antenna;
a receiver configured to receive a plurality of tones on the antenna; and
a processing system configured to identify as active tones the received tones that comprise a measure of energy satisfying a condition, identify a group for each active tone, each group comprising a weight, and determine a response based on the weights of the active tones.

80. A computer-program product comprising a machine-readable medium comprising instructions executable by a machine for performing a method of wireless communications, the instructions configured when run to cause the machine to determine a group of tones from a plurality of groups of tones, select a tone in the group, and transmit a wireless signal using the tone.

81. A computer-program product comprising a machine-readable medium comprising instructions executable by a machine for performing a method of wireless communications, the instructions configured when run to cause the machine to receive a plurality of tones, identify as active tones the received tones that comprise a measure of energy satisfying a condition, identify a group for each active tone, each group comprising a weight, and determine a response based on the weights of the active tones.
